# EUROPÄISCHE PATENTSCHRIFT

(11) **EP 1 048 953 B1**
(45) Veröffentlichungstag und Bekanntmachung des Hinweises auf die Patenterteilung: **30.05.2007**
(21) Anmeldenummer: 00107965.6
(22) Anmeldetag: 17.04.2000
(51) Int. Cl.: G01N 35/10, G01F 23/24, G01F 23/26

(54) **Verfahren und Vorrichtung zum Flüssigkeitstransfer mit einem Analysegerät**
Method and device for transferring liquids in an analyzer
Methode et dispositif pour transferer les liquides dans un appareil d'analyse

(30) Priorität: 28.04.1999 DE 19919305
(43) Veröffentlichungstag der Anmeldung: 02.11.2000
(73) Patentinhaber: Roche Diagnostics GmbH, 68305 Mannheim (DE)
(72) Erfinder: Mann, Karl-Heinz, 82362 Weilheim (DE); Sattler, Stephan, 82319 Starnberg (DE)
(74) Vertreter: Jany, Peter

(56) Entgegenhaltungen:
- EP-A- 0 555 710
- WO-A-98/12513
- US-A- 5 005 434

## Beschreibung

Die Erfindung betrifft eine Flüssigkeitstransfereinrichtung für ein Analysegerät mit einer Flüssigkeitstransferkanüle und einem kapazitiven Flüssigkeitshöhenstandsdetektor zur Detektion des Eintauchens der Flüssigkeitstransferkanüle in eine in einem Gefäß befindliche Analyseflüssigkeit, wobei der Flüssigkeitshöhenstandsdetektor eine Signalelektrode, eine Gegenelektrode und eine Detektionsschaltung zur Detektion einer Änderung der Kapazität zwischen der Signalelektrode und der Gegenelektrode aufweist, sowie ein entsprechendes Verfahren zur Kontrolle des Einsaugens von Analyseflüssigkeit in eine Flüssigkeitstransferkanüle und eine entsprechend ausgebildete Flüssigkeitstransferkanüle.

In Analysegeräten, wie sie für die Analyse von Körperflüssigkeiten, insbesondere von Blut, erforderlich sind, werden Flüssigkeitstransfereinrichtungen benötigt, um Analyseflüssigkeiten, insbesondere flüssige Proben oder Reagenzien, zu transferieren. Gebräuchliche Flüssigkeitstransfereinrichtungen sind beispielsweise Pipettoren, die dazu verwendet werden, Proben oder Reagenzien aus einem ersten Gefäß anzusaugen und in ein zweites Gefäß auszustoßen, sowie Dispensoren, bei denen die Flüssigkeitstransferkanüle über einen Schlauch an einen größeren Vorrat einer Flüssigkeit angeschlossen ist, die mit Hilfe einer Pumpeinrichtung durch die Kanülen ausgestoßen werden kann. Dispensoren erfüllen meist zugleich auch die Pipettorfunktion.

Allgemein ist als Flüssigkeitstransfereinrichtung im Sinne der vorliegenden Erfindung jede Vorrichtung anzusehen, die dazu dient, in einem Analysegerät in eine Analyseflüssigkeit einzutauchen, um irgendwelche Flüssigkeitstransferschritte (Ansaugen und/oder Ausstoßen von Flüssigkeit) mittels der Flüssigkeitstransferkanüle zu ermöglichen. Die Flüssigkeitstransferkanüle ist zum Beispiel eine Hohlnadel, welche üblicherweise aus einem dünnen Rohr aus Metall oder Kunststoff besteht. Sie wird nachfolgend einfachheitshalber auch als "Kanüle" bezeichnet. Andere bekannte Ausführungsformen sind einmal verwendbare Dosierspitzen, die nach dem Gebrauch entsorgt und durch neue ersetzt werden. Sie können eine rohrförmige oder kegelspitzartige Form, gegebenenfalls mit einem sich düsenartig verändernden Querschnitt, aufweisen, aus Metall oder Kunststoff, zum Beispiel einem leitfähigen Kunststoff, bestehen und werden im folgenden ebenfalls als "Kanüle" bezeichnet.

Wenn die Kanüle tief in die Analyseflüssigkeit eintaucht, bleibt ein relativ großer Flüssigkeitsüberschuß an ihrer Außenseite hängen. Hierdurch kann nicht nur die Genauigkeit der Dosierung verschlechtert werden, sondern besonders problematisch ist, daß der Flüssigkeitsüberschuß beim nächsten Eintauchen der Kanüle eine andere Flüssigkeit kontaminiert (sogenannte "Verschleppung") oder unwirtschaftlich viel Waschflüssigkeit erforderlich ist.

Um die Eintauchtiefe besser zu kontrollieren, werden Flüssigkeitstransfereinrichtungen mit einer Sensoreinrichtung zur Detektion des Eintauchens der Kanüle in die Analyseflüssigkeit versehen, die üblicherweise als Flüssigkeitshöhenstandsdetektor oder LLD (liquid level detector) bezeichnet wird. Der Flüssigkeitshöhenstandsdetektor ist mit dem Vertikalantrieb, durch den die Kanüle in die Analyseflüssigkeit eingetaucht wird, verbunden, um die Eintauchbewegung zu stoppen, wenn die Spitze der Kanüle um wenige Millimeter in die Analyseflüssigkeit eingetaucht ist. Es ist nämlich nicht nur das Problem der Verschleppung zu beachten, sondern gleichzeitig muß auch gewährleistet sein, daß keine Luft angesaugt wird, was zu diagnostisch relevanten Meßfehlern führen könnte. Aus diesem Grund ist eine Mindesteintauchtiefe einzuhalten, die ca. zwischen 0,1 mm und 5 mm betragen kann.

Die Vertikalposition der Kanüle ist dabei zugleich ein Maß für den Höhenstand der Flüssigkeit in dem jeweiligen Gefäß. Infolgedessen ermöglicht der Flüssigkeitshöhenstandsdetektor zugleich die Kontrolle der in dem jeweiligen Gefäß vorhandenen Flüssigkeitsmenge, um beispielsweise ein Signal zu geben, wenn der Vorrat einer Reagenzflüssigkeit verbraucht ist und die Reagenzflasche deshalb ausgewechselt werden muß.

Ein gebräuchliches Konstruktionsprinzip für Flüssigkeitshöhenstandsdetektoren basiert darauf, den elektrischen Widerstand zwischen der Kanüle und einer an der Spitze der Kanüle angebrachten Elektrode zu messen. Kanüle und Elektrode sind gegeneinander elektrisch isoliert, so daß der elektrische Widerstand zwischen ihnen im trockenen Zustand sehr hoch ist. Beim Eintauchen der Kanüle und der Elektrode bildet die Probenflüssigkeit eine leitende Verbindung, so daß sich der elektrische Widerstand sprunghaft ändert. Dieses Signal läßt sich mit einfachen elektronischen Mitteln zuverlässig nachweisen. Ein Nachteil dieses Prinzips ist jedoch darin zu sehen, daß außer der Kanüle eine Elektrode in die Flüssigkeit eintauchen muß, an der unvermeidlich ein Flüssigkeitsüberschuß hängen bleibt. Damit werden die zuvor erwähnten Probleme hinsichtlich Verschleppung und reduzierter Genauigkeit zusätzlich vergrößert, außer wenn Einmaldosierspitzen verwendet werden.

In dieser Beziehung überlegen sind kapazitive Flüssigkeitshöhenstandsdetektoren, bei denen als Signal zur Detektion des Eintauchens der Kanüle in die Flüssigkeit die Änderung der elektrischen Kapazität zwischen zwei Sensorelektroden mittels einer elektronischen Detektionsschaltung, welche eine Wechselspannungsquelle einschließt, erfaßt wird. Die erste Elektrode ist dabei üblicherweise die Kanüle selbst (welche aus Metall oder einem elektrisch leitenden (metallisierten) Kunststoff besteht) und mit der der heiße Pol der Wechselspannungsquelle verbunden ist (Signalelektrode). Die Gegenelektrode, welche üblicherweise auf Erdpotential liegt, ist bei den bekannten Vorrichtungen auf der Außenseite des Flüssigkeitsgefäßes (unter dessen Boden und teilweise um die Seitenwände des Gefäßes herum) angeordnet. Sie ist üblicherweise ein Bestandteil der Gefäßhalterung. Beim Eintauchen der Kanülenspitze in die Flüssigkeit ändert sich die Kapazität zwischen der Signalelektrode und der Gegenelektrode aufgrund der elektrischen Leitfähigkeit und der dielektrischen Eigenschaften der Flüssigkeit.

Derartige Flüssigkeitshöhenstandsdetektoren sind in der EP-A-0 164 679, dem US-Patent 4 818 492 und der EP-A-0 355 791 beschrieben. Diese Druckschriften enthalten nähere Erläuterungen, auf welche hier Bezug genommen wird.

Ein grundsätzliches Problem kapazitiver Flüssigkeitshöhenstandsdetektoren besteht darin, daß die Kapazitätsänderung beim Eintauchen in die Flüssigkeit sehr klein ist im Vergleich zu den sonstigen zwangsläufig vorhandenen Kapazitäten ("Störkapazitäten", z.B. des Anschlußkabels und des Verstärkereingangs). Infolgedessen ist das Verhältnis zwischen Nutzsignal und Störsignalen sehr ungünstig. Besonders problematisch ist dabei, daß ein Teil der Störkapazitäten nicht konstant ist, sondern sich zeitlich verhältnismäßig schnell ändert. Dies gilt insbesondere für kapazitive Störungen, die durch die Bewegung von Objekten (Bestandteile des Analyseautomaten, Hände oder andere Körperteile des Bedienungspersonals) verursacht werden. Insbesondere auf einem vollautomatischen Analysegerät, welches zahlreiche bewegliche Teile hat, sind solche Störungen in der Praxis nicht zu vermeiden.

In der EP-A-0 355 791 wird ein spezielles derartiges Problem (Störungen durch eine das Gefäß verschließende Membran) dadurch behoben, daß ein Referenzsignal bei der Kontaktierung der Membran fixiert und bei der weiteren Abwärtsbewegung der Kanüle die Differenz zu diesem fixierten Referenzsignal detektiert wird. Dieses Verfahren ist auf den speziellen Anwendungszweck ausgerichtet. Störkapazitäten, die sich zwischen der Fixierung des Referenzsignals und der Detektion der Flüssigkeitsoberfläche ändern, führen zu einer Fehldetektion.

Bei dem in dem US-Patent 4 818 492 beschriebenen Flüssigkeitshöhenstandsdetektor wird die Störkapazität der Zuleitungen passiv mit Hilfe einer Brückenschaltung kompensiert. Andere kapazitive Störungen werden hierdurch jedoch nicht eliminiert und können auch bei dieser Konstruktion Fehldetektionen verursachen.

Eine Flüssigkeitstransfereinrichtung für ein Analysegerät mit einem Flüssigkeitshöhenstandsdetektor mit verbesserter Störungssicherheit und zuverlässigerer Funktion ist aus dem Dokument EP 0555710 A2 bekannt. Darin wurde eine die Flüssigkeitstransferkanüle einschließende Koaxialelektrodenanordnung vorgeschlagen, die eine aktive Abschirmung mittels einer Kompensationselektrode, die an eine Spannungsfolgerschaltung angeschlossen ist, aufweist. Ferner wurde in einer vorteilhaften Weiterbildung vorgeschlagen, eine zusätzliche Abschirmelektrode, die als Gegenelektrode wirkt und auf Konstantpotential liegt, vorzusehen.

Bei einer solchen koaxialen, insbesondere triaxialen Anordnung mit aktiver Schirmung und mitgeführter Bezugselektrode ist es möglich, unabhängig von den konstruktiven Gegebenheiten der Geräteumgebung, den Füllmengen und den Dielektrika der Flüssigkeiten an sämtlichen, durch die Kanüle erreichbaren Stellen im Gerät ohne spezifische Anpassung oder Einstellung den Flüssigkeitsstand zu detektieren. Der Grund hierfür besteht im wesentlichen darin, daß der Signalpfad von der Kanülenspitze kapazitiv zur Flüssigkeitsoberfläche, von dort entlang eines gedachten Leitwertes entlang der Flüssigkeitsoberfläche und anschließend über einen kapazitiven Signalpfad zurück zur mitgeführten Bezugselektrode führt und somit die darunterliegende Flüssigkeitssäule von vernachlässigbarem Einfluß ist. Der Flüssigkeitshöhenstandsdetektor reagiert somit sehr empfindlich auf Kapazitätsänderungen in der Umgebung der Spitze, so daß Einflüsse aus der Umgebung die Detektion weniger verfälschen.

Es hat sich jedoch herausgestellt, daß die hohe Empfindlichkeit im Bereich der Spitze der Kanüle auch nachteilig sein kann, da jeder Feuchtefilm im Bereich der Spitze als Oberfläche einer kompakten, soliden Flüssigkeit detektiert wird, auch wenn die Kanülenspitze die Oberfläche der Flüssigkeit noch gar nicht erreicht hat. Um dies zu vermeiden, können spezielle, aufwendige Fehlerstrategien entwickelt und eingesetzt werden, beispielsweise Nachfahren, mehrfaches Einstechen, Druckmessung oder Plausibilitätskontrollen bei vorhersagbarer Füllstandshöhe.

Ein die Detektion der Flüssigkeitsoberfläche verfälschender Flüssigkeitsfilm kann insbesondere die Bildung von Schaum oder von seifenblasenähnlichen Strukturen sein, die relativ langlebig sind und auch durch Einstechen der Kanüle nicht zwangsläufig zu zerstören sind. Solche Schaumschichten oder seifenblasenähnlichen Strukturen entstehen zum Beispiel beim Schütteln von Vollblutproben, beim Zentrifugieren von Blutproben bei der Serumplasmagewinnung, beim Transport von Reagenz-Rack-Packs und beim Resuspendieren und Aufrühren sogenannter mit Streptavidin beschichteter Beads. Derartige Schaumschichten sind in der Regel 2 bis 5 mm dick. Auch sich am Behälterkragen bildende Blasen lassen sich in vielen Fällen nicht durch die dünne Kanüle zerstechen.

Eine Flüssigkeitstransfereinrichtung mit einem kapazitiven Flüssigkeitshöhenstandsdetektor, die das Problem der Erkennung von Schaum mittels eines zusätzlichen temperaturabhängigen Widerstands löst, wurde in dem Dokument EP 0913671 A1 vorgeschlagen, das am 6. Mai 1999 veröffentlicht wird.

Ein weiteres sich bei dem Flüssigkeitstransfer stellendes Problem besteht darin, daß durch auftretende Fehler unerkannt falsche Analyseergebnisse gewonnen werden können, wenn die zu transferierende Flüssigkeit nicht oder nicht korrekt dosiert wird. Ursachen hierfür können nicht nur Schaumschichten oder seifenblasenähnliche Strukturen auf der Flüssigkeit sein, sondern zum Beispiel auch mechanische Fehler der Kanüle, Verstopfungen der Kanüle oder Aufsetzen der Kanüle auf dem Boden des Gefässes.

Mechanische Fehler der Kanüle sind insbesondere bei der Verwendung von Einmaldosierspitzen kritisch. Diese werden in Spritzgußverfahren hergestellt und nur stichprobenartig auf Fehler kontrolliert. Eine vollständige Kontrolle sämtlicher Einmaldosierspitzen ist nicht möglich, so daß grundsätzlich die Gefahr besteht, daß Einmaldosierspitzen mit Fehlern wie Riefen oder Löchern unerkannt verwendet werden und zu Fehldosierungen und falschen Analyseergebnissen führen.

Verstopfungen, die auch als Clots bezeichnet werden, die sich beim Aufsaugen von Flüssigkeit in die Kanüle ergeben können, oder das Aufsetzen der Kanüle auf dem Gefäßbodem sind zwar prinzipiell dadurch detektierbar, daß beim Versuch des Aufsaugens von Flüssigkeit ein hoher Unterdruck in der Kanüle aufgebaut wird. Der mit einer zusätzlichen Unterdruckmessung verbundene apparative Aufwand zum Erkennen derartiger Fehler ist jedoch relativ hoch. Ein besonderes aufwendiges Verfahren zum Kontrollieren der Dosierung ist bei einem Immunologie-Analyzer für Blutbanken bekannt, bei dem jeder Dosiervorgang mittels einer Videokamera und einer Bildverarbeitung kontrolliert wird.

Bei kapazitiven Flüssigkeitshöhenstandsdetektoren ist eine Dosierungskontrolle bisher nicht bekannt. Grundsätzlich wäre es zwar denkbar, beim Ausstoßen von Flüssigkeit verfügbare Signale der kapazitiven Höhenstandsmessung zur Dosierkontrolle heranzuziehen. Die Höhe und Form der Signale hängt jedoch sehr stark von den jeweiligen Gegebenheiten, beispielsweise Gefäßform, Gefäßart, Füllhöhe und der leitfähigen Umgebung ab, und ist daher relativ unsicher. Eine Signalkontrolle bei Flüssigkeitsabgabe nach Mehrfachpipettierung ist wegen der vielfältigen Signalformen sehr schwierig und ebenfalls unzuverlässig. Besonders kritisch bei einer kapazitiven Flüssigkeitshöhenstandsdetektion ist ferner, daß diese kaum zwischen Schaum und Flüssigkeit unterscheiden kann.

Aus den Dokumenten US 5,005,434 und EP 0527059 A1 sind Apparate zur Analyse von Flüssigkeiten bekannt, bei denen ein aus zwei Elektroden gebildeter Detektor im Fluidkanal angeordnet ist, der eine Meßstrecke zur Detektion von Luftblasen bildet. Die Meßstrecke ist jedoch jeweils im oberen Bereich der Flüssigkeitstransferkanüle angeordnet, was verschiedene Nachteile aufweist.

Der Luftblasendetektor zeigt nur dann eine korrekte Funktion des Flüssigkeitstransfers an, wenn die Detektionsstrecke zwischen den Elektroden mit Flüssigkeit gefüllt ist. Dies erfordert, daß das Dosiervolumen größer als das Kanülenvolumen ist, so daß die Dosierung kleiner Flüssigkeitsmengen im Bereich weniger µl nicht möglich ist oder nur dann, wenn mehr Flüssigkeit aufgesaugt als beim nachfolgenden Dosieren abgegeben wird. Letzteres hat den Nachteil einer erhöhten Verschleppung, einer reduzierten Dosiergenauigkeit und erfordert ein aufwendiges Waschen der Kanüle.

Ein weiterer Nachteil besteht darin, daß auch für den Fall, daß der Luftblasendetektor das Vorliegen von Flüssigkeit erkannt hat, sich zwischen dem unteren Ende der Kanülenspitze und dem Luftblasendetektor unerkannte Luftblasen befinden können, die eine Fehldosierung zur Folge haben. Ferner sind die bekannten Luftblasendetektoren für die Verwendung mit Einmaldosierspitzen ungeeignet, da sie mit der zu transferierenden Analyseflüssigkeit in Kontakt kommen müssen und damit die durch den Austausch der Einmaldosierspitzen zu erreichende Verschleppungsfreiheit zunichte machen. Ferner sind in den beiden genannten Dokumenten keine kapazitiven Flüssigkeitshöhenstandskontrollen angesprochen, die aufgrund der im allgemeinen kleinen Signaländerung besondere Schwierigkeiten bei der Erkennung des Eintauchens der Kanülenspitze in die Flüssigkeit aufweisen.

Aus dem Dokument US 5,045,286 ist ein Flüssigkeitshöhenstandsdetektor bekannt, bei dem das Eintauchen der Kanülenspitze in die Flüssigkeit durch eine am unteren Ende der Spitze durchgeführte Leitfähigkeitsmessung erkannt wird. Dieses Verfahren ist jedoch relativ langsam und kann bei dem Eintauchen der Spitze in Schaum, der auf der Außenseite der Spitze einen leitfähigen Film bildet, zu Fehldosierungen führen, da das System nicht erkennt, daß keine Flüssigkeit angesaugt wird.

Aus dem Dokument US 5,855,851 ist ein kapazitiver Flüssigkeitshöhenstandsdetektor bekannt, der im Bereich der Kanülenspitze eine zusätzliche Leitfähigkeitsmessung aufweist. Die Messung der Leitfähigkeit wird etwas oberhalb des unteren Endes der Spitze auf deren Außenseite durchgeführt, um zu überprüfen, ob die Spitze zu tief in Flüssigkeit eingetaucht wurde und gewaschen werden muß. Mit dieser bekannten Vorrichtung kann nicht erkannt werden, ob in die Kanüle Luftblasen eingesaugt wurden, sondern nur, ob sich an der Außenseite unerwünschte Flüssigkeit befindet.

Der Erfindung liegt die Aufgabe zugrunde, die bekannten kapazitiven Flüssigkeitshöhenstandsdetektoren, insbesondere die aus dem Dokument EP 0555710 A2 bekannte triaxiale Anordnung mit aktiv geschirmter Kompensationselektrode und mitgeführter, als Gegenelektrode wirkender Abschirmelektrode derart weiterzubilden, daß fehlerfrei zwischen kompakter solider Flüssigkeit und Schaum- bzw. Flüssigkeitsfilmen unterschieden werden kann und auch bei kleinen Dosiervolumen kontrolliert werden kann, ob Luft oder Flüssigkeit angesaugt wurde.

Die Aufgabe wird durch eine Flüssigkeitstransfereinrichtung mit den im Anspruch 1 angegebenen Merkmalen gelöst.

Die der Erfindung zugrundeliegende Idee besteht darin, daß zur Kontrolle, ob die Kanüle in die Analyseflüssigkeit eingetaucht ist, oder zur Kontrolle, ob Luft oder Flüssigkeit in die Flüssigkeitstransferkanüle eingesaugt wurde, der elektrische Widerstand oder entsprechend der elektrische Leitwert einer Detektionsstrecke detektiert wird, die im Fluidkanal der Flüssigkeitstransferkanüle liegt und sich bei korrekter Funktion mit Analyseflüssigkeit füllt. Eine Detektionsstrecke in diesem Sinne ist also ein leitfähiger Pfad durch Analyseflüssigkeit, die sich in der Kanüle befindet. Ein solcher Strompfad kann linear oder räumlich als Detektionszone ausgebildet sein, wobei der Anfang und das Ende bzw. die Pole durch die beiden Kontrollelektroden gegeben sind.

Da die elektrische Leitfähigkeit von Analyseflüssigkeit höher als die von Luft ist, kann auf diese Weise kontrolliert werden, ob die Detektionsstrecke durch Luft oder durch Analyseflüssigkeit verläuft. Wenn erfindungsgemäß die Detektionsstrecke überwiegend im Innern der Kanüle verläuft und mindestens eine der Kontrollelektroden oberhalb des unteren Endes der Spitze der Kanüle angeordnet ist, ist sichergestellt, daß die Kontrolleinrichtung das Eintauchen der Kanüle in Schaum erkennen kann, da der Schaum nicht zu einer stark erhöhten Leitfähigkeit der Detektionsstrecke führen kann. Die Detektionsstrecke kann somit herangezogen werden, um ein von dem kapazitiven Flüssigkeitshöhenstandsdetektor erkanntes Eintauchen in eine Flüssigkeit zu überprüfen und zu verifizieren und um das Einsaugen von Luft in die Kanüle zu erkennen.

Prinzipiell wäre eine Kontrolle der Leitfähigkeit der Analyseflüssigkeit mittels der Detektionsstrecke auch alleine, d.h. ohne Kombination mit einem kapazitiven Flüssigkeitshöhenstandsdetektor, zur Detektion des Eintauchens in die Analyseflüssigkeit und zum Erkennen von Luftblasen geeignet. Ein solcher Aufbau ist jedoch in den meisten Anwendungsfällen zu träge, um den an die Detektionsgeschwindigkeit gestellten Anforderungen zu entsprechen. Durch die erfindungsgemäße Kombination einer schnell reagierenden kapazitiven Flüssigkeitshöhenstandsdetektion mit einer langsameren Nachkontrolle mittels der Detektionsstrecke werden die Vorteile beider Detektionsmöglichkeiten vereint.

Mit der Erfindung ist eine qualitative Kontrolle des Flüssigkeitstransfers mit der Kanüle durch Überwachung des Widerstands der Detektionsstrecke sowohl beim Einsaugen als auch beim Abgeben von Flüssigkeit möglich. Bei Mehrfachpipettierungen können die einzelnen, in die Kanüle eingesaugten und durch Trennblasen getrennten Flüssigkeitsabschnitte identifiziert werden, da die Trennblasen den Widerstand der Detektionsstrecke ändern. Eine quantitative Kontrolle des Flüssigkeitstransfers kann durchgeführt werden, wenn die Dosierrate, mit der Analyseflüssigkeit eingesaugt oder ausgestoßen wird, bekannt ist und die bis zur Änderung des Widerstands der Detektionsstrecke verstreichende Zeit gemessen wird.

Ein Defekt der Kanüle, ein Einsaugen von Luft, ein Verstopfen des Fluidkanals (durch sogenannte Clots) oder das Aufsetzen der Dosierkanüle auf den Gefäßboden kann dadurch erkannt werden, daß keine Analyseflüssigkeit die Detektionsstrecke erreicht bzw. füllt und sich deren Widerstand nicht ändert. Die Erfindung weist somit den Vorteil auf, daß es möglich ist, eine qualitative Dosierungskontrolle durchzuführen, wobei geprüft wird, ob Analyseflüssigkeit in die Kanüle eingesaugt oder durch diese abgegeben wurde. Ferner ist eine quantitative Dosierungskontrolle der transferierten Analyseflüssigkeit möglich. Ein weiterer Vorteil besteht darin, daß zuverlässig Schaum erkannt wird und die Oberfläche der Analyseflüssigkeit sicher detektiert werden kann, so daß ein korrekter Flüssigkeitstransfer ermöglicht wird. Es ist keine aufwendige Unterdruckmessung erforderlich, um ein Verstopfen der Dosiernadel zu registrieren. Mit der Erfindung werden somit Ziele erreicht, um die die Fachwelt sich schon lange bemüht hat.

Es ist vorteilhaft, wenn die Flüssigkeitstransferkanüle, insbesondere die Nadelspitze, eine der Kontrollelektroden bildet.

Wenn die Kanüle eine der Kontrollelektroden bildet, ist der konstruktive Aufwand zur Herstellung und gegebenenfalls auch der technische Aufwand zur Messung des Widerstands der Detektionsstrecke verringert. Dabei kann die Kontrollelektrode durch entsprechende Gestaltung der Zuleitungen und der Materialien der Kanüle prinzipiell an beliebiger Stelle in der Kanüle plaziert sein. Besonders vorteilhaft ist es, wenn die Spitze eine Kontrollelektrode bildet, da hierdurch gewährleistet ist, daß die Detektionsstrecke nahe im Bereich der Spitze verläuft.

Ein anderes vorteilhaftes Merkmal kann sein, daß die Detektionsstrecke in einem solchen Abstand über dem unteren Ende der Spitze angeordnet ist, daß sie nicht beim Eintauchen der Flüssigkeitstransferkanüle in die Analyseflüssigkeit, sondern erst beim Einsaugen von Analyseflüssigkeit in die Flüssigkeitstransferkanüle vollständig durch Analyseflüssigkeit verläuft. Hierdurch ist eine gezielte Kontrolle des Flüssigkeitstransfers durch die in Analyseflüssigkeit eingetauchte Flüssigkeitstransferkanüle möglich, da die Detektionsstrecke zwischen den Kontrollelektroden erst beim Einsaugen von Analyseflüssigkeit den Widerstand ändert.

Es ist nicht erforderlich, daß sich die Detektionsstrecke über die gesamte Höhe der Kanüle erstreckt. Es ist zur Ermöglichung der Kontrolle möglichst kleiner Dosiervolumen sogar wünschenswert, daß sich die Detektionsstrecke über einen möglichst kleinen Höhenabschnitt der Kanüle erstreckt und nicht zu weit von deren Spitze angeordnet ist.

Es kann vorteilhaft sein, wenn das untere Ende der Detektionsstrecke oberhalb des unteren Endes der Kanülenspitze angeordnet ist. Hierdurch ist es möglich, die Kanüle in die Analyseflüssigkeit geringfügig einzutauchen, ohne daß die die untere Kontrollelektrode benetzt wird oder die Detektionsstrecke bereits auf Analyseflüssigkeit reagiert, so daß das Ansaugen von Luftblasen zuverlässig erkannt werden kann. Das untere Ende der Detektionsstrecke ist vorzugsweise zwischen 0,5 mm und 5 mm oberhalb des unteren Endes der Spitze angeordnet.

Um auch kleine Volumen an Analyseflüssigkeit zuverlässig kontrollieren zu können, ist es vorteilhaft, wenn die Detektionsstrecke im Bereich der Spitze angeordnet ist, so daß nicht viel Analyseflüssigkeit in die Flüssigkeitstransferkanüle bis zum Eintreten einer Änderung des Widerstands der Detektionsstrecke eingesaugt werden muß. Nach einem weiteren vorteilhaften Merkmal wird daher vorgeschlagen, daß das obere Ende der Detektionsstrecke im Bereich der Spitze, vorzugsweise zwischen 0,5 mm und 30 mm oberhalb des unteren Endes der Spitze angeordnet ist.

Die erfindungsgemäße zusätzliche Leitfähigkeitsmessung einer Detektionsstrecke in Kombination mit einem kapazitiven Flüssigkeitshöhenstandsdetektor ist prinzipiell mit allen kapazitiven Flüssigkeitshöhenstandsdetektoren vorteilhaft, unabhängig davon, ob mit diesen die Kapazität der Flüssigkeitstransferkanüle gegen Masse gemessen wird oder die Flüssigkeitstransferkanüle Bestandteil einer Koaxialelektrodenanordnung ist. Allgemein ist eine Kontrolle mittels einer Detektionsstrecke immer dann vorteilhaft, wenn der kapazitive Flüssigkeitshöhenstandsdetektor so ausgebildet ist, daß er sehr empfindlich auf Kapazitätsänderungen in der Umgebung (Proben, Rotor, Reagenzgefäße, statische Aufladungen usw.) reagiert und insbesondere, wenn er sehr empfindlich auf Kapazitätsänderungen in der Umgebung der Spitze der Flüssigkeitstransferkanüle reagiert. Hingegen wird die Kontrolle der Detektionsstrecke in der Praxis keine besonderen Vorteile bei der Erkennung von Schaum bieten, wenn die Masse der detektierten Flüssigkeit selbst in den Signalpfad einbezogen ist, da in diesem Fall die Schaum- oder Bläschenbildung kaum die Detektion der Flüssigkeitsoberfläche beeinträchtigt.

Die Erfindung ist daher bevorzugt bei Koaxialelektrodenanordnungen gemäß dem Dokument EP 0555710 A2, auf das insoweit vollinhaltlich Bezug genommen wird, d.h. bei Koaxialelektrodenanordnungen, die vorteilhafterweise eine aktive Schirmung mittels einer an eine Spannungsfolgerschaltung angeschlossene Kompensationselektrode und/oder eine bis in den Bereich der Spitze der Flüssigkeitstransferkanüle geführte Abschirmelektrode als Gegenelektrode aufweisen.

Eine erste bevorzugte zusätzliche Besonderheit kann daher darin bestehen, daß die Flüssigkeitstransferkanüle Teil einer Koaxialelektrodenanordnung ist, die außer der Flüssigkeitstransferkanüle mindestens eine diese umgebende und von ihr isolierte Koaxialelektrode aufweist. Ein zusätzliches vorteilhaftes Ausbildungsmerkmal besteht darin, daß die Koaxialelektrodenanordnung eine Abschirmelektrode aufweist, die die Signalelektrode umgibt, auf Konstantpotential liegt und als Gegenelektrode wirkt.

Eine andere vorteilhafte Besonderheit kann sein, daß die Detektionsschaltung eine Wechselspannungsquelle und eine Spannungsfolgerschaltung aufweist, und der Eingang und Ausgang der Spannungsfolgerschaltung mit zwei benachbarten Elektroden der Koaxialelektrodenanordnung als Signalelektrode und Kompensationselektrode verbunden sind, so daß zwischen der Signalelektrode und der Kompensationselektrode keine Spannungsdifferenz auftritt und die Kapazität zwischen der Signalelektrode und der Kompensationselektrode kompensiert wird. Dabei kann nach einem weiteren vorteilhaften Merkmal vorgesehen sein, daß eine erste der Elektroden der Koaxialelektrodenanordnung die Signalelektrode des Flüssigkeitshöhenstandsdetektors und mit dem Eingang der Spannungsfolgerschaltung verbunden ist und eine zweite Elektrode der Koaxialelektrodenanordnung, die zu der Signalelektrode benachbart ist, mit dem Ausgang der Spannungsfolgerschaltung verbunden ist.

Vorteilhafterweise ist ferner vorgesehen, daß die Flüssigkeitstransferkanüle als Signalelektrode mit dem Eingang der Spannungsfolgerschaltung und die benachbarte Koaxialelektrode als Kompensationselektrode mit dem Ausgang der Spannungsfolgerschaltung verbunden ist.

Die Erfindung wird im folgenden anhand von in den Figuren schematisch dargestellten Ausführungsbeispielen näher erläutert. Es zeigen:
- Fig. 1: Eine Flüssigkeitstransfereinrichtung in perspektivischer Darstellung,
- Fig. 2: einen Querschnitt einer ersten erfindungsgemäßen Flüssigkeitstransferkanüle,
- Fig. 3: einen Querschnitt einer zweiten erfindungsgemäßen Flüssigkeitstransferkanüle,
- Fig. 4: eine dritte erfindungsgemäße Flüssigkeitstransferkanüle in Form einer Einmaldosierspitze,
- Fig. 5: die Flüssigkeitstransferkanüle der Fig. 2 mit Systemflüssigkeit,
- Fig. 6: die Flüssigkeitstransferkanüle der Fig. 5 beim Ansaugen von Schaum,
- Fig. 7: eine Schnittdarstellung einer Koaxialelektrodenanordnung mit einem Prinzipschaltbild der Detektionsschaltung,
- Fig. 8: ein Zeitdiagramm zu einem kapazitiven Flüssigkeithöhenstandsdetektor,
- Fig. 9: ein Zeitdiagramm zu einer Detektionsstrecke,
- Fig. 10: eine Einzelheit bei der Herstellung einer Flüssigkeitstransferkanüle gemäß Fig. 2,
- Fig. 11: eine weitere Einzelheit bei der Herstellung einer Flüssigkeitstransferkanüle gemäß Fig. 2,
- Fig. 12: einen ersten Schritt bei der Herstellung einer Flüssigkeitstransferkanüle gemäß Fig. 4,
- Fig. 13: einen zweiten Schritt bei der Herstellung einer Flüssigkeitstransferkanüle gemäß Fig. 4,
- Fig. 14: einen dritten Schritt bei der Herstellung einer Flüssigkeitstransferkanüle gemäß Fig. 4 und
- Fig. 15: die Flüssigkeitstransferkanüle zu den Figuren 12 bis 14.

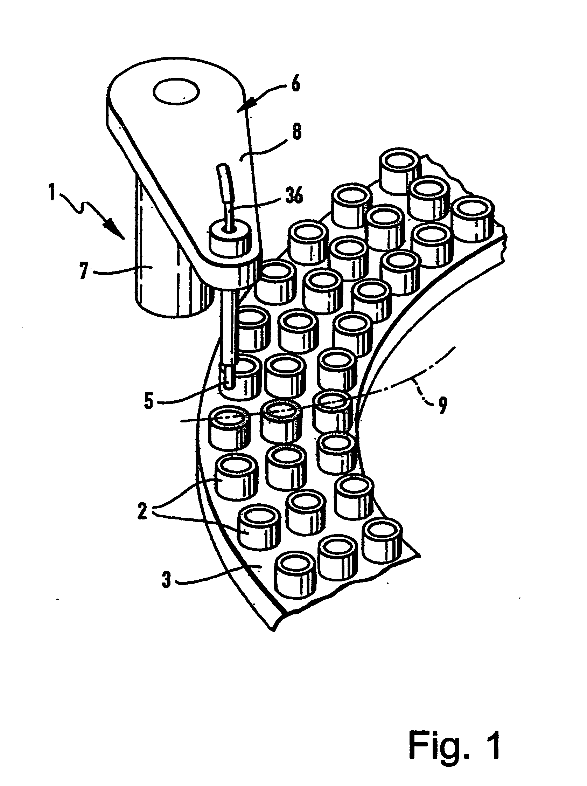

Die in Figur 1 dargestellte Flüssigkeitstransfereinrichtung 1 dient dazu, eine Analyseflüssigkeit aus einem der Gefäße 2 zu entnehmen und in ein anderes Gefäß zu transferieren. Die Gefäße 2 befinden sich auf einem Rotor 3 oder einer anderen beweglichen Gefäßhalterung. In der Praxis weisen automatische Analysegeräte im Regelfall mehrere Gefäßhalterungen auf. Die Gefäßvolumen betragen ca. 400 µl bis 40 ml und die transferierten Flüssigkeitsmengen ca. 10-100 pl, mit einer Auflösung von ca. 0,25 µl. Zur Inkubation bei 37 °C werden die Flüssigkeiten in Mikroküvetten auf einem Inkubationsrotor ausgestoßen; auch dabei muß die Füllstandshöhe ermittelt werden.

Eine Flüssigkeitstransferkanüle 5 mit einem Innendurchmesser von ca. 0,4 mm ist an einer Bewegungseinrichtung 6 befestigt, welche eine mittels eines nicht dargestellten Vertikalantriebs aufwärts und abwärts bewegbare Vertikalsäule 7 und einen Schwenkarm 8 aufweist. Dadurch kann die Kanüle 5 auf dem Schwenkkreis 9 in verschiedene Positionen gebracht und in eines der Gefäße 2 abgesenkt werden. Derartige Flüssigkeitstransfereinrichtungen sind in verschiedenen Ausführungsformen bekannt. Im Hinblick auf einen geeigneten Antriebsmechanismus sei beispielsweise auf die EP-A-0 408 804 verwiesen.

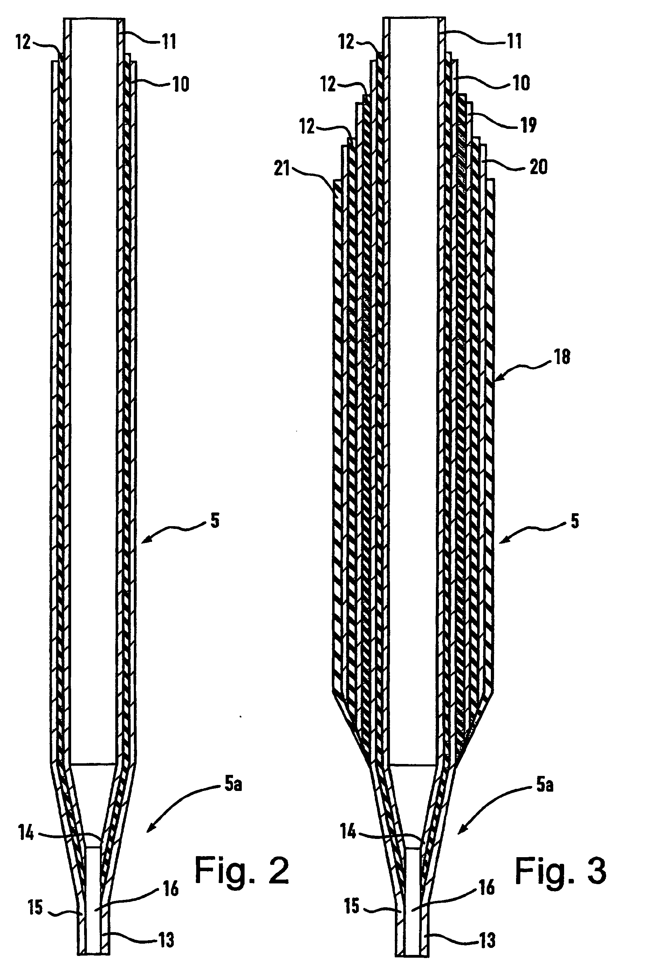

Die Fig. 2 zeigt einen Querschnitt durch eine erste erfindungsgemäße Flüssigkeitstransferkanüle 5, die nadelförmig ausgebildet ist. Sie umfaßt zwei konzentrische Rohre 10, 11, die aus Metall oder einem leitfähigen Kunststoff bestehen und mittels eines Isolierstoffs 12 elektrisch voneinander isoliert sind. Im Bereich der Spitze 5a der Kanüle 5 sind die Rohre 10, 11 spitzenförmig ausgezogen, wobei das äußere Rohe 10 am unteren Ende ein gerades Ansatzstück 13 aufweist.

Das äußere Rohr 10 bildet die Signalelektrode eines kapazitiven Flüssigkeitshöhenstandsdetektors zur Detektion des Eintauchens der Kanüle 5 in eine Analyseflüssigkeit. Das Absenken der Kanüle 5 in Richtung auf eine Analyseflüssigkeit erfolgt mit einem motorischen Antrieb. Sobald die Spitze 5a Flüssigkeit oder Schaum berührt, erkennt der kapazitive Flüssigkeitshöhenstandsdetektor den Kontakt mit einem leitfähigen Medium. Zur Erzielung einer Mindesteintauchtiefe fährt der Antrieb noch eine geringe Strecke weiter, damit die Spitze 5a hinreichend eingetaucht ist. Dann zieht die angeschlossene Dosierpumpe mittels des im Innern der Kanüle 5 befindlichen Hilfsfluids, das Luft oder eine Systemflüssigkeit sein kann, ein bestimmtes Volumen aus der Analyseflüssigkeit auf. Bei der Verwendung einer Systemflüssigkeit oder bei Mehrfachpipettierungen ist es vorteilhaft, wenn zwischen den einzelnen aufgesogenen Flüssigkeitsabschnitten kleine Trennluftblasen vorhanden sind.

Das untere Ende des inneren Rohrs 11 endet oberhalb des unteren Endes der Spitze 5a der Kanüle 5. Die unteren Abschnitte des inneren Rohrs 11 und des äußeren Rohrs 10 bilden jeweils eine Kontrollelektrode 14, 15, zwischen denen eine Detektionsstrecke 16 ausgebildet ist. Die Kontrollelektroden 14, 15 erfahren durch aufgesaugte Analyseflüssigkeit eine leitfähige Verbindung, die detektiert werden kann.

Wenn die Kanüle 5 in die Analyseflüssigkeit eingetaucht und mittels der Dosierpumpe Analyseflüssigkeit angesaugt wird, kann mittels der Detektionsstrecke 16 kontrolliert werden, ob Analyseflüssigkeit angesaugt wurde. Wenn bei der Absenkbewegung die Kanüle 5 die Flüssigkeitsoberfläche nicht erreicht hat und in Schaum gestoppt wurde, wird hauptsächlich Luft eingesaugt. Die dadurch verursachte elektrische Leitfähigkeit zwischen den Kontrollelektroden 14, 15 entlang der Detektionsstrecke 16 ist geringer als bei dem Aufsaugen von Analyseflüssigkeit, so daß feststellbar ist, ob Analyseflüssigkeit oder Schaum angesaugt wurde. Auch eventuelle andere auftretende Fehlerquellen bei dem Dosieren von Analyseflüssigkeit können auf diese Weise mittels der Detektionsstrecke 16 erkannt werden.

Die Flüssigkeitstransferkanüle 5 ist bevorzugt Teil einer Koaxialelektrodenanordnung 11. Hinsichtlich vorteilhafter Einzelheiten einer Koaxialelektrodenanordnung, der elektronischen Schaltung, der Vorteile und möglichen Alternativen und Varianten wird auf die Dokument EP 0555710 A2 und EP 0913671 A1 Bezug genommen.

Ein in Fig. 3 dargestelltes Ausführungsbeispiel einer Koaxialelektrodenanordnung 18 einer Flüssigkeitstransferkanüle 5 umfaßt eine als Kompensationselektrode einer aktiven Schirmung wirkende Koaxialelektrode 19 und eine der Abschirmung dienende Gegenelektrode 20. Zwischen den einzelnen Elektroden befindet sich Isolierstoff 12, der soweit erforderlich als Dielektrikum ausgebildet sein kann. Die Außenseite der Kanüle 5 kann mit einer Schutzbeschichtung 21, die beispielsweise aus Isolierstoff bestehen kann, beschichtet sein.

Das als Signalelektrode dienende äußere Rohr 10 wird in radialer Richtung auf seinem gesamten Umfang durch die Kompensationselektrode 19 und die Abschirmelektrode 20 umgeben und ist in seiner räumlichen Lage relativ zu den Elektroden fixiert. Die Koaxialelektrode ist somit ein festes Teil einer sich in axialer Richtung über die überwiegende Länge der Flüssigkeitstransferkanüle 5, mit Ausnahme der Spitze 5a, erstreckenden Koaxialelektrodenanordnung 18, so daß keine Relativbewegung zwischen dem äußeren Rohr 10 und den es umgebenden Elektroden stattfindet. Die Kompensationselektrode 19 wird, wie auch die Abschirmelektrode 20, gemeinsam mit der Flüssigkeitstransferkanüle 5 mittels einer Bewegungseinrichtung auf- und abwärts bewegt oder umgekehrt das Gefäß mit der Analyseflüssigkeit in Richtung auf die Flüssigkeitstransferkanüle 5 angehoben und abgesenkt.

Aufgrund der aktiven Abschirmung mittels der Kompensationselektrode 19 ist bei dieser Relativbewegung zwischen Flüssigkeitstransferkanüle 5 und der Analyseflüssigkeit das als Signalelektrode dienende äußere Rohr 10 weitgehend abgeschirmt, so daß nicht die gesamte Kanülenlänge kapazitiv an sämtliche leitfähige Teile in ihrer Umgebung koppelt, sondern im wesentlichen die ungeschirmte, am unteren Ende auf einem kurzen Stück herausragende Spitze 5a. Es wird also nur dort die Kapazität bzw. eine Änderung der Kapazität detektiert, wo es für die kapazitive Flüssigkeitshöhenstandsdetektion zweckmäßig ist.

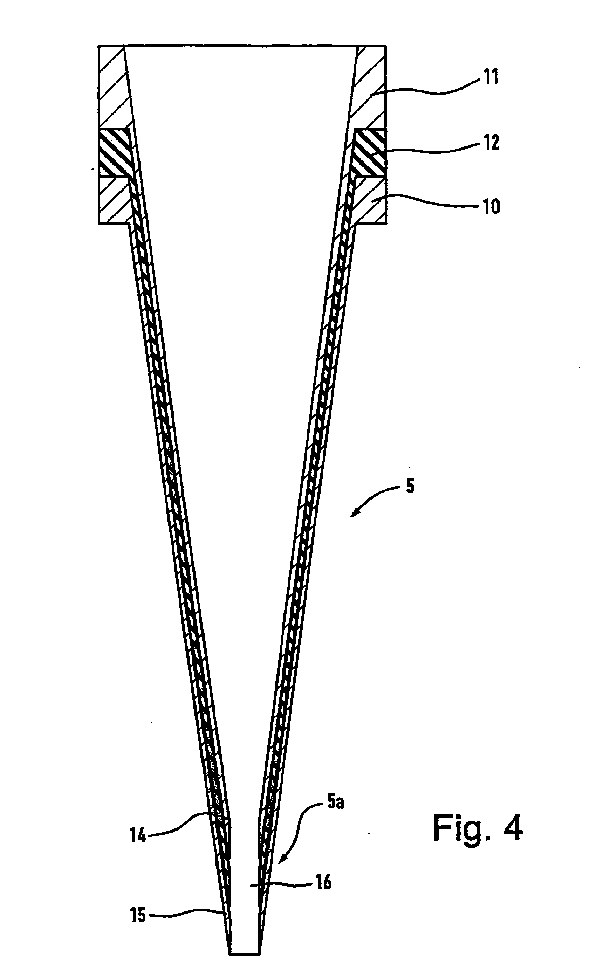

In Fig. 4 ist eine erfindungsgemäße Flüssigkeitstransferkanüle 5 dargestellt, die in Form einer Einmaldosierspitze ausgebildet ist. Ihr Aufbau entspricht demjenigen der in Fig. 2 dargestellten Kanüle 5, mit dem Unterschied, daß sie sich zur Spitze hin verjüngend ausgebildet ist. Sie umfaßt drei konzentrische Kunststoffschichten, von denen die äußere 10 und innere 11 leitfähig sind und die mittlere aus Isolierstoff 12 besteht. Auch hier bilden die unteren Abschnitte der Schichten 10, 11 jeweils eine Kontrollelektrode 14, 15, zwischen denen eine Detektionsstrecke 16 ausgebildet ist, die einen Abstand zum unteren Ende der Spitze 5a aufweist und sich über einen in Längsrichtung der Kanüle 5 verlaufenden Abschnitt erstreckt.

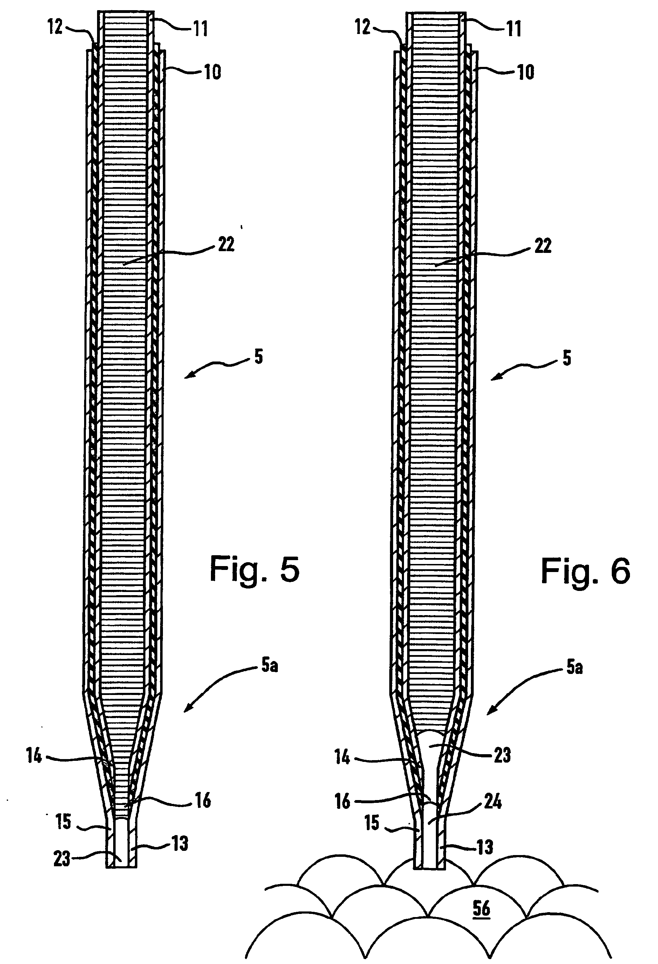

In Fig. 5 ist die Kanüle 5 der Fig. 2 beim Dosieren mit Systemflüssigkeit 22 und einer Luftblase 23 dargestellt. Auch in diesem Fall kann die Detektionsstrecke 16 zum Erkennen der Systemflüssigkeit 22 und der Luftblase 23 sowie zum Kontrollieren des Einsaugens von Analyseflüssigkeit verwendet werden. Dies ist in Fig. 6 dargestellt, wo eine aus dem Schaum 56 angesaugte Schaumblase 24 nur zu einer geringen Leitfähigkeit der Detektionsstrecke 16 führt, so daß von einer die Leitfähigkeit zwischen den Kontrollelektroden 14, 15 überprüfenden Detektionsschaltung erkannt werden kann, daß Schaum anstatt Analyseflüssigkeit angesaugt wurde.

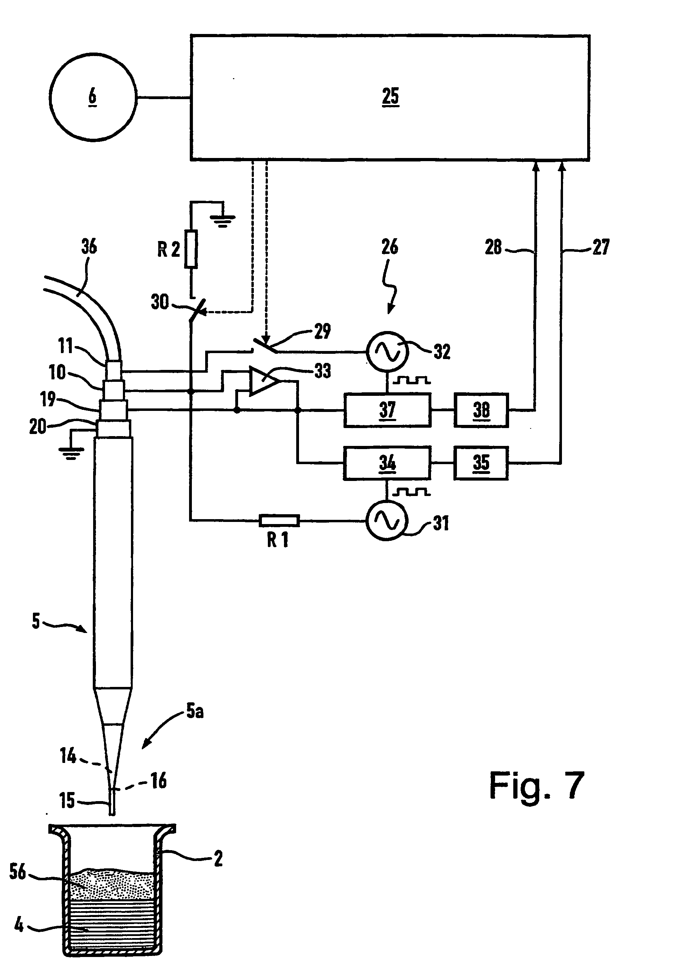

Die Fig. 7 zeigt ein Prinzipschaltbild einer Detektionsschaltung mit einer Flüssigkeitstransferkanüle 5, die derjenigen der Fig. 3 entspricht. Schematisch dargestellt ist die Bewegungseinrichtung 6 mit der zugehörigen Streuerschaltung 25, die zwei Signale einer Detektionsschaltung 26 auswertet. Das erste Signal 27 ist das der kapazitiven Flüssigkeitshöhenstandsdetektion und das zweite Signal 28 das Signal der Dosierkontrolle mittels der im Bereich der Spitze 5a der Kanüle 5 angeordneten Detektionsstrecke 16. Die Kanüle 5 ist über den Schlauch 36 an eine nicht dargestellte Dosierpumpe angeschlossen.

Beim Absenken der Kanüle 5 sind die beiden Schalter 29 und 30 geöffnet, um die kapazitive Flüssigkeitshöhenstandsdetektion, nicht durch den niederohmigen Lastwiderstand R2 für die Leitfähigkeitsmessung zu stören. Die Anregungsspannung für den kapazitiven Flüssigkeitshöhenstandsdetektor mit einer Frequenz von ca. 100 kHz wird von dem ersten Generator 31 über einen hochohmigen Widerstand R1 von ca. 100 kΩ auf das äußere Rohr 10 der Kanüle 5 gegeben. Die elektrische Verbindung zum inneren Rohr 11 erfolgt kapazitiv und über Influenz bzw. Induktion, d.h. das innere Rohr 11 ist elektrisch an das äußere Rohr 10 gekoppelt. Beim Eintauchen der Kanüle 5 ändert sich die Kapazität an der Spitze 5a sprunghaft, so daß sich die Spannung über dem Widerstand R1 hinsichtlich Amplitude und Phase ändert. Diese Änderung wird mittels des Vorverstärkers 33, des Phasengleichrichters 34 und des Tiefpasses 35 in Gleichspannung umgewandelt und als erstes Signal 27, das das Signal der kapazitiven Flüssigkeitshöhenstandsdetektion bildet, der Steuerschaltung 25 zugeführt.

Nachdem durch den kapazitiven Flüssigkeitshöhenstandsdetektor detektiert wurde, daß die Kanüle 5 Flüssigkeit berührt hat, was gegebenenfalls auch dann der Fall sein kann, wenn es sich um Schaum oder um eine Störung handelt, erfolgt durch die Steuerung 25 und die Bewegungseinrichtung 6 eine weitere Absenkung der Kanüle 5 um wenige Millimeter zur Sicherstellung einer Mindesteintauchtiefe. Danach wird die Kontrolle mittels der Detektionsstrecke 16 vorbereitet und werden die Schalter 29 und 30 geschlossen.

Durch den Schalter 29 wird das innere Rohr 11 mit dem zweiten Generator 32 verbunden. Der zweite Generator 32 erzeugt zur Erfassung der Leitfähigkeit der Detektionsstrecke eine deutlich niedrigere Frequenz als der erste Generator 31; seine Frequenz beträgt etwa 1 kHz. Durch den Schalter 30 wird die Detektionsstrecke 16 mit einem Widerstand R2 belastet. Der Widerstand R2 beträgt ca. 1kΩ. Durch die niedrige Frequenz und den kleinen Widerstand R2 werden kapazitive Störeinflüssevernachlässigbar, d.h. die Leitfähigkeitsmessung wird erleichtert.

Nach dem Schließen der Schalter 29 und 30 wird die nicht dargestellte Dosierpumpe durch die Steuerschaltung 25 veranlaßt, ein kleines Volumen anzusaugen, das so groß ist, daß die Detektionsstrecke 16 ganz durch eingesaugte Analyseflüssigkeit verläuft, sofern kein Fehler vorliegt. Wird leitfähige Analyseflüssigkeit in die Detektionsstrecke 16 in der Spitze 5a aufgezogen, bildet sie eine leitende Verbindung zwischen den Kontrollelektroden 14, 15. Von dem zweiten Generator 32 fließt Strom über die Detektionsstrecke 16 in der eingesaugten Analyseflüssigkeit und den Widerstand R2 auf Masse.

Der zu der Leitfähigkeit der Detektionsstrecke 16 proportionale Spannungsabfall an dem Widerstand R2 wird mittels des Vorverstärkers 33, des Phasengleichrichters 37 und des Tiefpasses 38 in eine Gleichspannung umgewandelt, die als zweites Signal 28 für die Durchführung der Dosierkontrolle der Steuerschaltung 25 zugeführt wird. Wenn die Detektionsstrecke 16 eine hinreichend große Leitfähigkeit aufweist, bedeutet dies, daß Analyseflüssigkeit eingesaugt wurde. Ist der Widerstand der Detektionsstrecke 16 dagegen nach dem Einsaugen zu hoch, liegt ein Fehlerzustand vor, beispielsweise ein Einsaugen von Luft oder Schaum, eine Verstopfung der Kanüle 5 oder eine Undichtigkeit des Schlauchs 36. Um den Fehlerzustand zu verifizieren, kann die Kanüle 5 dann schrittweise oder kontinuierlich tiefer positioniert werden, wobei das Ansaugen und die Kontrolle der Leitfähigkeit der Detektionsstrecke 16 regelmäßig wiederholt oder kontinuierlich durchgeführt werden.

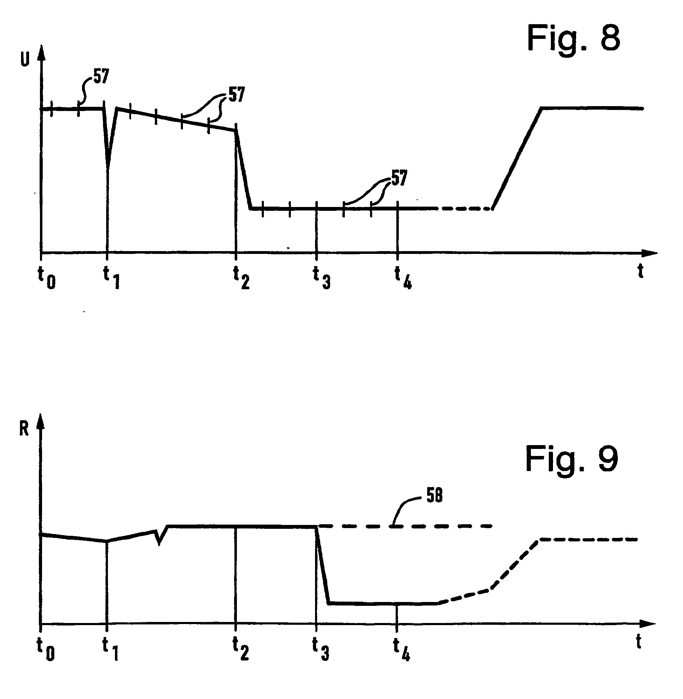

Die Fig. 8 zeigt in einem Zeitdiagramm das Signal 27 am Ausgang des Tiefpasses 35 beim Absenken der Flüssigkeitstransferkanüle 5 in Richtung auf die Analyseflüssigkeit 4. Die Spitze 5a befindet sich zum Zeitpunkt t=0 in einem Abstand von der Oberfläche der Analyseflüssigkeit 4. Die Absenkbewegung wird inkrementell durchgeführt, wobei die Verfahrgeschwindigkeit der Kanüle ca. 1000 Schritte pro Sekunde mit einer Schrittweite von jeweils 0,2 mm beträgt. Dabei wird in regelmäßigen Zeitintervallen von 1 msec abgefragt, ob sich die Spannung mit einer bestimmten Geschwindigkeit geändert hat. Die Abtastzeitpunkte 57 sind durch die senkrechten Striche angedeutet.

Zum Zeitpunkt t₁ findet eine Störung statt, die ein schnelles, kurzfristiges Absenken des Signals zur Folge hat. Eine solche Störung kann beispielsweise durch eine elektrostatische Störung oder eine platzende Blase verursacht sein. Die Absenkbewegung der Kanüle 5 wird durch das kurzfristige und schnelle Absinken des Signals jedoch noch nicht gestoppt, sondern im Anschluß an dieses Ereignis wird mehrfach, beispielsweise dreimal, abgefragt, ob ein bestimmter Wert relativ zu dem letzten gemessenen Bezugswert vor dieser Störung unterschritten bleibt. Wenn dies nicht der Fall ist, beispielsweise weil die Blase inzwischen geplatzt ist und die Spitze 5a sich daher inzwischen wieder in Luft befindet, wird die Abwärtsbewegung weiter fortgesetzt, da erkannt wurde, daß die Spitze 5a noch nicht in die Analyseflüssigkeit 4 eingetaucht ist.

Zum Zeitpunkt t₂ fällt das Signal wieder schnell ab und bleibt im Anschluß daran auch während der mehrfachen weiteren Abtastungen 57 auf dem niedrigen Wert. Dies bedeutet, daß die Spitze 5a entweder in die Analyseflüssigkeit 4 eingetaucht ist oder sich in einer Blase oder einem Schaum über der Analyseflüssigkeit 4 befindet, die sich durch das Einstechen nicht zurückgebildet haben. Anhand des Signals des kapazitiven Flüssigkeitshöhenstandsdetektors allein kann diese Unterscheidung, die innerhalb kürzester Zeit getroffen werden muß, um ein zu tiefes Eintauchen der Flüssigkeitstransferkanüle 5 in die Analyseflüssigkeit 4 zu verhindern, nicht getroffen werden. Auch wenn beispielsweise nach drei bis vier weiteren Abfrageintervallen die Absenkbewegung gestoppt wird und die möglichen Auswertebedingungen erfüllt sind, d.h. eine Erkennung eines steilen Absinkens des Signals durch Differenzieren des Signals und Triggerung auf einen bestimmten Schwellenwert, der Vergleich mit einem Bezugswert vor dem Triggerereignis und die Integration mehrerer Abtas-tungen zur Störunterdrückung, kann nicht entschieden werden, ob die Spitze 5a wirklich in kompakte Flüssigkeit eingetaucht ist oder nicht.

Zur Lösung dieses Problems wird ein kleines Volumen eingesaugt und das Signal 28 herangezogen, das ein Maß für den Widerstand der Detektionsstrecke 16 ist und deren paralleler zeitlicher Verlauf in Fig. 9 dargestellt ist. Bei der Störung zum Zeitpunkt t₁ reagiert die Detektionsstrecke 16 nicht, da noch keine Analyseflüssigkeit 4 eingesaugt wurde.

Zum Zeitpunkt t₃ wird Analyseflüssigkeit eingesaugt. Aus Fig. 9 ist ersichtlich, daß der Widerstand R der Detektionsstrecke 16 abfällt. Dies ist nur der Fall, wenn die Detektionsstrecke 16 tatsächlich durch eingesaugte Analyseflüssigkeit 4 verläuft. Bei einer Störung, beispielsweise einer nicht zerplatzenden Blase, würde das Signal den gestrichelt dargestellten alternativen Verlauf 58 annehmen. Durch die Messung des Widerstands der Detektionsstrecke 16 zum Zeitpunkt t₄ kann daher unterschieden werden, ob die Flüssigkeitstransferkanüle 5, deren Abwärtsbewegung beispielsweise zum Zeitpunkt t₂ oder t₃ gestoppt wurde, in die Analyseflüssigkeit 4 eingetaucht ist oder nicht, so daß mit dem Flüssigkeitstransfer begonnen oder eine neue Absenkbewegung eingeleitet bzw. diese fortgesetzt werden kann. Für einen genauen Flüssigkeitstransfer könnte die Dosierkanüle aus der Flüssigkeit herausgezogen, bereits aufgesaugte Flüssigkeit ausgestoßen und dann die Dosierkanüle wieder in die vorher gefundene Position gefahren werden, um die Dosierung durchzuführen.

Eine Variante hierzu, die besonders für zeitkritische Anwendungsfälle interessant ist, bei denen es auf eine sehr schnelle Messung ankommt und in denen die Zeit für die Nachkontrolle mittels einer Detektionsstrecke 16 vor dem Flüssigkeitstransfer nicht zur Verfügung steht, besteht darin, daß der Flüssigkeitstransfer bereits nach dem Stoppen der Eintauchbewegung, d.h. zum Zeitpunkt t₃, zu dem die kapazitiven Nachkontrollen abgeschlossen sind, durchgeführt wird und während des Flüssigkeitstransfers die Kontrolle mit der Detektionsstrecke 16 durchgeführt wird. Falls die Widerstandsmessung ergibt, daß die Flüssigkeitstransferkanüle 5 zum Zeitpunkt t₃ noch nicht in die Analyseflüssigkeit eingetaucht war, wird dies dem Analysesystem signalisiert und das Meßergebnis der jeweiligen Probe im Nachhinein verworfen oder der Bediener durch ein Signal sofort darauf hingewiesen, daß Probleme bei der Dosierung auftreten. Auf diese Weise kann eine höhere Durchsatzrate erzielt werden.

Die Anordnung der Kontrollelektroden 14, 15 sollte kapazitätsarm sein, um den kapazitiven Flüssigkeitshöhenstandsdetektor nicht durch parasitäre Kapazitäten zu stören. Daher wird in einer vorteilhaften Ausbildung vorgeschlagen, daß die Kontrollelektroden 14, 15 oder mindestens eine Zuleitung zwischen einer Abschirmelektrode und einer Kompensationselektrode angeordnet ist, deren Kapazität durch eine Spannungsfolgerschaltung kompensiert wird.

Die Detektionsstrecke 16 kann auch zwischen der Signalelektrode und einer Kontrollelektrode ausgebildet sein. Vorteil hierbei ist, daß man keine separaten Zuleitungen zu der Detektionsstrecke 16 benötigt, da beispielsweise die Flüssigkeitstransferkanüle, die Abschirmelektrode oder die Koaxialelektrode als Zuleitung genutzt werden kann. Das kapazitive, zu detektierende Signal wird dadurch nicht zusätzlich kapazitiv belastet.

Die Kontrollelektroden 14, 15 sollten glatt sein, keine Angriffsfläche bieten und zweckmäßig mechanisch befestigt und elektronisch angeschlossen sein. Eventuell können sie mit einer flüssigkeitsabstoßenden Nanobeschichtung versehen sein. Sie können auch in einer Vertiefung oder Öffnung im Bereich der Spitze 5a eingelassen werden oder mit einem chemisch resistenten Vergußmittel eingegossen sein.

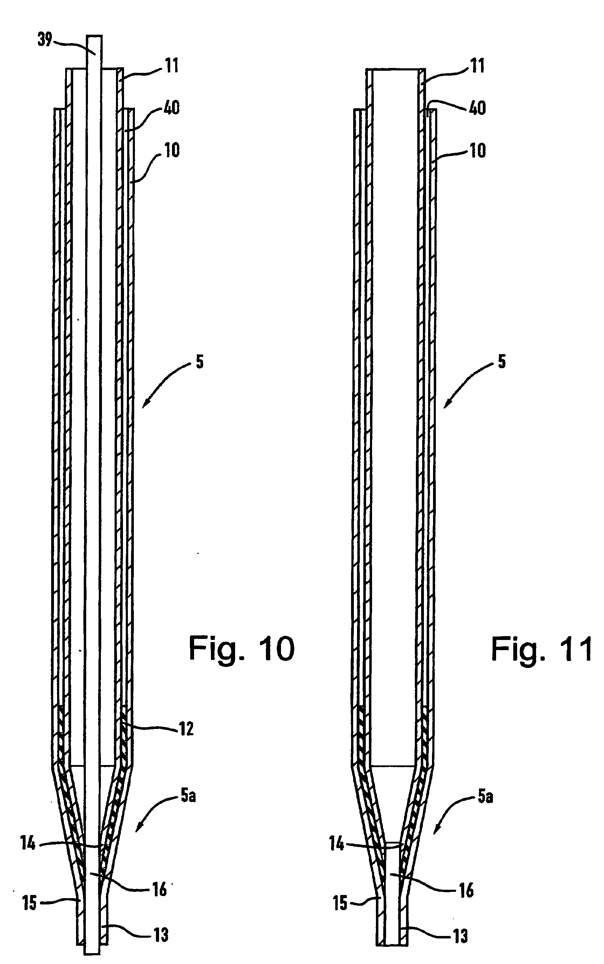

Die Figuren 10 und 11 veranschaulichen die Herstellung einer Kanüle 5 gemäß Fig. 2. Vorgefertigte Metallrohre 10, 11 werden konzentrisch zueinander montiert. Ein Metalldraht 39, der nahezu denselben Durchmesser wie die am unteren Ende der Metallrohre 10, 11 angeordneten Dosierbohrungen aufweist, wird durch beide Metallrohre 10, 11 geführt. Der Zwischenraum 40 zwischen beiden Metallrohren 10, 11 wird mit schmelz- oder sinterfähigem, nicht leitendem Pulver oder Granulat gefüllt. Der Metalldraht 39 dient dabei zur radialen Positionierung der Metallrohre 10, 11 und verhindert, daß das in den Zwischenraum 40 gefüllte Material in die Dosierbohrungen eindringen kann. Zum Schmelzen und Aushärten des Materials in dem Zwischenraum 40, wobei sich der Isolierstoff 12 bildet, werden die Metallrohre 10, 11 vertikal stehend erhitzt.

Der ausgehärtete Isolierstoff 12 reicht bis zu einer vorgegebenen Höhe in dem Zwischenraum 40. Der Zwischenraum 40 muß nicht vollständig gefüllt sein; in vielen Anwendungsfällen ist es ausreichend, wenn die unteren Enden der Rohre 10, 11 durch Isolierstoff 12 zueinander fixiert werden, ohne daß der Zwischenraum 40 über seine gesamte Höhe gefüllt ist. Nach dem Abkühlen wird der Metalldraht herausgezogen, so daß eine Kanüle 5 gemäß Fig. 11 entsteht. Um Beschädigungen der Dosierbohrung zu vermeiden, kann der Metalldraht 39 vor dem Herausziehen gestreckt werden, wodurch sich sein Durchmesser reduziert. Bei Bedarf kann das Innere der Dosieröffnung zusätzlich geglättet werden, beispielsweise durch Honen oder ein ähnliches Verfahren.

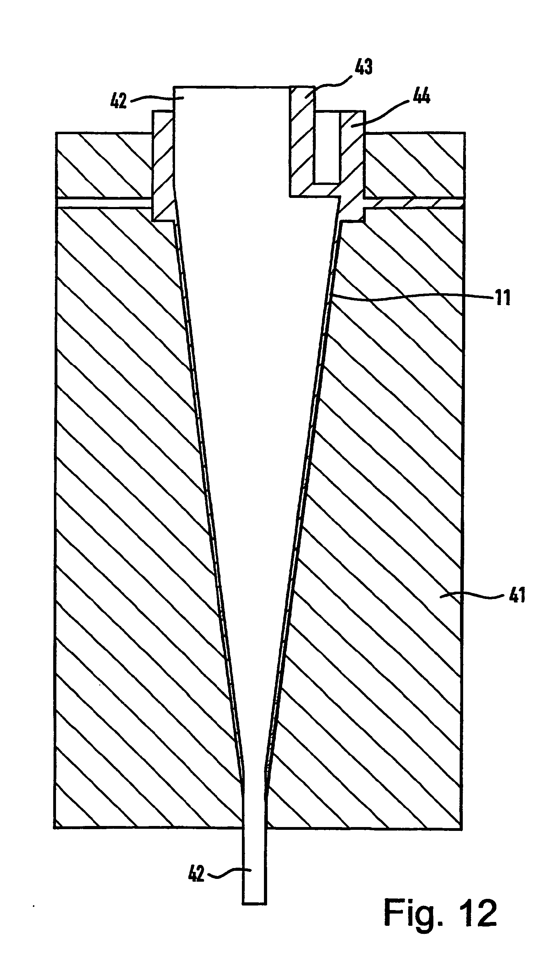

Die Figuren 12 bis 15 veranschaulichen die Herstellung einer Flüssigkeitstransferkanüle 5 in Form einer EinmalDosierspitze gemäß Fig. 4. Dabei werden drei Schichten mit einem Mehrkomponenten-Spritzgußverfahren hergestellt.

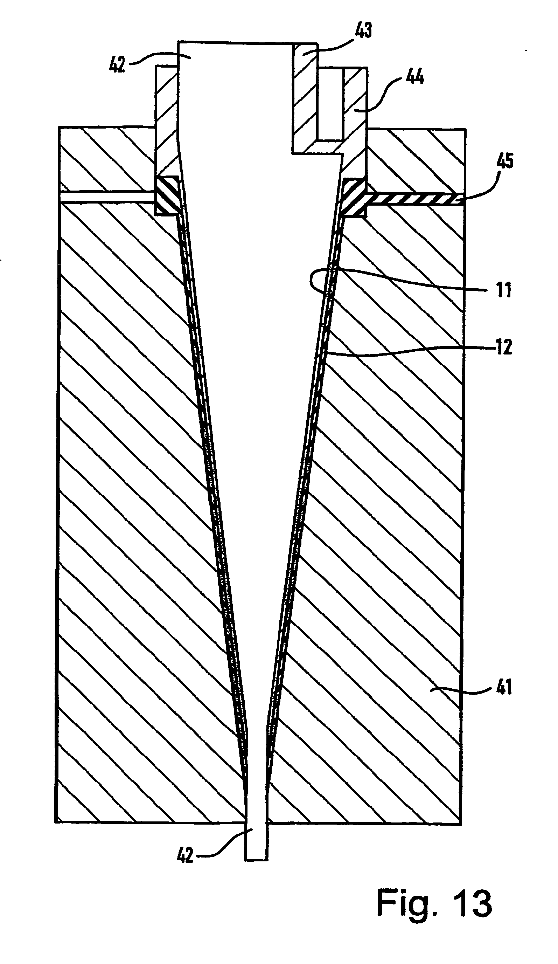

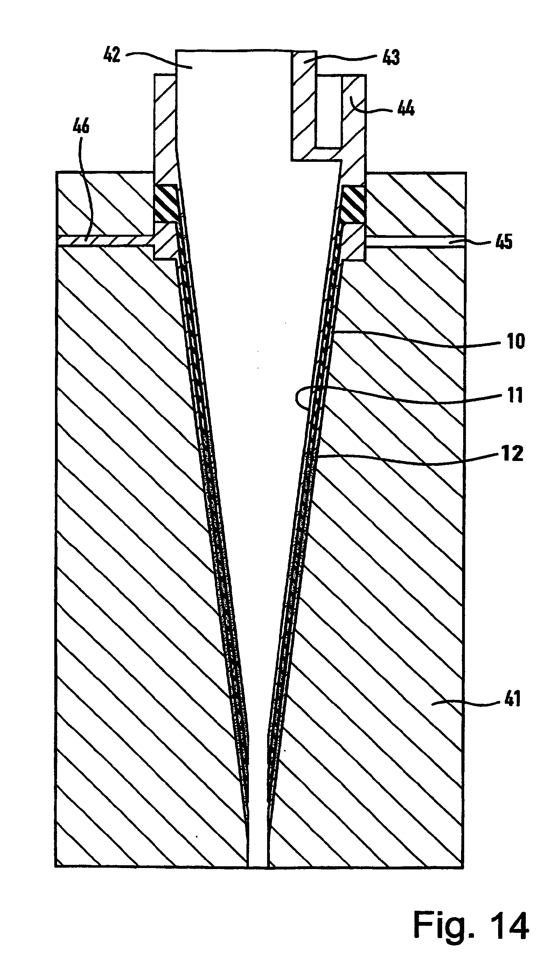

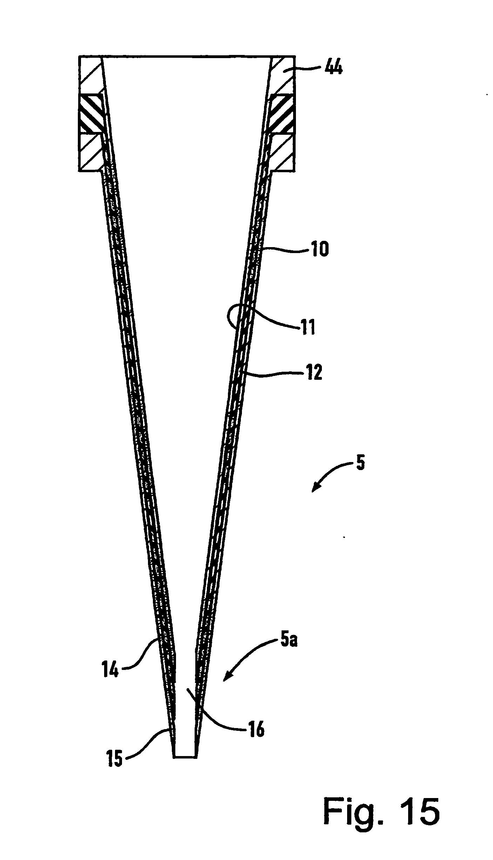

Fig. 12 zeigt eine Form 41 mit einem darin eingesetzten, angepaßten Dorn 42. Zunächst wird die innere, leitfähige Schicht 11 mittels des Angusses 43 in den Hohlraum zwischen Form 41 und Dorn 42 gespritzt, wobei auch ein Abstreifer 44 gebildet wird. Nach dem Erstarren der Schicht 11 aus einem leitfähigen Kunststoff wird der Dorn 42 etwas aus der Form 41 herausgezogen und der dabei entstehende Hohlraum wird wie in Fig. 13 dargestellt zur Bildung der Isolierschicht 12 durch einen weiteren Anguß 45 gefüllt. Nach dem Erstarren der Isolierschicht 12 wird der Dorn 42 nochmals etwas aus der Form 41 herausgezogen und wie in Fig. 14 dargestellt die Schicht 10 aus leitfähigem Kunststoff durch den Anguß 46 gespritzt. Nach dem Erstarren wird die Form geöffnet und die fertige Kanüle 5, die in Fig. 15 dargestellt ist, von dem Dorn 42 abgestriffen.

### Bezugszeichenliste

- 1: Flüssigkeitstransfereinrichtung
- 2: Gefäß
- 3: Rotor
- 4: Analyseflüssigkeit
- 5: Flüssigkeitstransferkanüle
- 5a: Spitze
- 6: Bewegungseinrichtung
- 7: Vertikalsäule
- 8: Schwenkarm
- 9: Schwenkkreis
- 10: äußeres Rohr
- 11: inneres Rohr
- 12: Isolierstoff
- 13: Ansatzstück
- 14: Kontrollelektrode
- 15: Kontrollelektrode
- 16: Detektionsstrecke
- 18: Koaxialelektrodenanordnung
- 19: Koaxialelektrode
- 20: Gegenelektrode
- 21: Schutzbeschichtung
- 22: Systemflüssigkeit
- 23: Luftblase
- 24: Schaumblase
- 25: Steuerschaltung
- 26: Detektionsschaltung
- 27: erstes Signal
- 28: zweites Signal

- 29: erster Schalter
- 30: zweiter Schalter
- 31: erster Generator
- 32: zweiter Generator
- 33: Vorverstärker
- 34: Phasengleichrichter
- 35: Tiefpaß
- 36: Schlauch
- 37: Phasengleichrichter
- 38: Tiefpaß
- 39: Metalldraht
- 40: Zwischenraum
- 41: Form
- 42: Dorn
- 43: Anguß
- 44: Abstreifer
- 45: Anguß
- 46: Anguß
- 56: Schaum
- 57: Abtastzeitpunkte
- 58: alternativer Verlauf
- U: Spannung
- t: Zeit
- R: Widerstand
- R1: Widerstand
- R2: Widerstand

## Patentansprüche

1. Flüssigkeitstransfereinrichtung für ein Analysegerät mit einer Flüssigkeitstransferkanüle (5) und einem kapazitiven Flüssigkeitshöhenstandsdetektor zur Detektion des Eintauchens der Flüssigkeitstransferkanüle (5) in eine in einem Gefäß (2) befindliche Analyseflüssigkeit (4), wobei der Flüssigkeitshöhenstandsdetektor eine Signalelektrode, eine Gegenelektrode und eine Detektionsschaltung (26) zur Detektion einer Änderung der Kapazität zwischen der Signalelektrode und der Gegenelektrode umfaßt,
**dadurch gekennzeichnet, daß**
die Flüssigkeitstransferkanüle (5) zwei Kontrollelektroden (14, 15) aufweist, zwischen denen eine Detektionsstrecke (16) gebildet ist, die sich über einen in Längsrichtung der Flüssigkeitstransferkanüle (5) verlaufenden Abschnitt erstreckt, wobei die Flüssigkeitstransferkanüle (5) eine der Kontrollelektroden (15) bildet,
die Kontrollelektroden (14, 15) derart angeordnet sind, daß die Detektionsstrecke (16) im Innern der Flüssigkeitstransferkanüle (5) verläuft,
mindestens eine der Kontrollelektroden (14) in einem Abstand oberhalb des unteren Endes der Spitze (5a) der Flüssigkeitstransferkanüle (5) angeordnet ist,
die Detektionsschaltung (26) eine Kontrolleinrichtung (32, 36) umfaßt, die zum Kontrollieren einer sich beim Füllen der Detektionsstrecke (16) in der Flüssigkeitstransferkanüle (5) mit Analyseflüssigkeit (4) ergebenden Änderung des Widerstands (R) der Detektionsstrecke (16) ausgebildet ist.

2. Flüssigkeitstransfereinrichtung nach Anspruch 1, **dadurch gekennzeichnet, daß** die Spitze (5a) der Flüssigkeitstransferkanüle (5) eine der Kontrollelektroden (15) bildet.

3. Flüssigkeitstransfereinrichtung nach einem der vorhergehenden Ansprüche, **dadurch gekennzeichnet, daß** das untere Ende der Detektionsstrecke (16) oberhalb des unteren Endes der Spitze (5a) angeordnet ist.

4. Flüssigkeitstransfereinrichtung nach Anspruch 3, **dadurch gekennzeichnet, daß** das untere Ende der Detektionsstrecke (16) zwischen 0,5 mm und 5 mm oberhalb des unteren Endes der Spitze (5a) angeordnet ist.

5. Flüssigkeitstransfereinrichtung nach einem der vorhergehenden Ansprüche, **dadurch gekennzeichnet, daß** das obere Ende der Detektionsstrecke (16) zwischen 0,5 mm und 30 mm oberhalb des unteren Endes der Spitze (5a) angeordnet ist.

6. Flüssigkeitstransfereinrichtung nach einem der vorhergehenden Ansprüche, **dadurch gekennzeichnet, daß** eine Kontrollelektrode (14) von einem in der Flüssigkeitstransferkanüle (5) angeordneten Innenrohr (11), in das die Analyseflüssigkeit (4) einsaugbar ist, insbesondere von dessen unteren Ende gebildet wird.

7. Flüssigkeitstransfereinrichtung nach einem der vorhergehenden Ansprüche, **dadurch gekennzeichnet, daß** die Flüssigkeitstransferkanüle (5) Teil einer Einmaldosierspitze ist.

8. Flüssigkeitstransfereinrichtung nach einem der vorhergehenden Ansprüche, **dadurch gekennzeichnet, daß** die Flüssigkeitstransferkanüle (5) Teil einer Koaxialelektrodenanordnung (18) ist, die außer der Flüssigkeitstransferkanüle (5) mindestens eine diese umgebende und von ihr isolierte Koaxialelektrode (19) aufweist.

9. Flüssigkeitstransfereinrichtung nach Anspruch 8, **dadurch gekennzeichnet, daß** die Koaxialelektrodenanordnung (18) eine Abschirmelektrode (20) aufweist, die die Signalelektrode umgibt, auf Konstantpotential liegt und als Gegenelektrode wirkt.

10. Flüssigkeitstransfereinrichtung nach Anspruch 8 oder 9, **dadurch gekennzeichnet, daß** die Detektionsschaltung (26) eine Wechselspannungsquelle und eine Spannungsfolgerschaltung aufweist und der Eingang und Ausgang der Spannungsfolgerschaltung mit zwei benachbarten Elektroden der Koaxialelektrodenanordnung (18) als Signalelektrode und Kompensationselektrode verbunden sind, so daß zwischen der Signalelektrode und der Kompensationselektrode keine Spannungsdifferenz auftritt.

11. Flüssigkeitstransfereinrichtung nach Anspruch 10, **dadurch gekennzeichnet, daß** eine erste der Elektroden der Koaxialelektrodenanordnung (18) die Signalelektrode des Flüssigkeitshöhenstandsdetektors und mit dem Eingang der Spannungsfolgerschaltung verbunden ist und eine zweite Elektrode der Koaxialelektrodenanordnung, die zu der Signalelektrode benachbart ist, mit dem Ausgang der Spannungsfolgerschaltung verbunden ist.

12. Flüssigkeitstransfereinrichtung nach Anspruch 10 oder 11, **dadurch gekennzeichnet, daß** die Flüssigkeitstransferkanüle (5) als Signalelektrode mit dem Eingang der Spannungsfolgerschaltung und die benachbarte Koaxialelektrode als Kompensationselektrode mit dem Ausgang der Spannungsfolgerschaltung verbunden ist.

13. Verfahren zur Kontrolle des Einsaugens von Analyseflüssigkeit (4) in eine Flüssigkeitstransferkanüle (5) einer Flüssigkeitstransfereinrichtung gemäß einem der vorhergehenden Ansprüche eines Analysegerätes, deren Eintauchen in eine in einem Gefäß (2) befindliche Analyseflüssigkeit (4) mittels eines kapazitiven Flüssigkeitshöhenstandsdetektors, der eine Signalelektrode, eine Gegenelektrode und eine Detektionsschaltung (26) zur Detektion einer Änderung der Kapazität zwischen der Signalelektrode und der Gegenelektrode umfaßt, detektiert wird,
**dadurch gekennzeichnet, daß**
zur Kontrolle des Füllens der Flüssigkeitstransferkanüle (5) mit Analyseflüssigkeit (4) die Änderung des Widerstands (R) einer zwischen Kontrollelektroden (14, 15) der Flüssigkeitstransferkanüle (5) ausgebildeten Detektionsstrecke (16), die sich über einen in Längsrichtung der Flüssigkeitstransferkanüle (5) verlaufenden Abschnitt erstreckt, mittels einer Kontrolleinrichtung (32, 36) kontrolliert wird, wobei die Kontrollelektroden (14, 15) derart angeordnet sind, daß die Detektionsstrecke (16) im Innern der Flüssigkeitstransferkanüle (5) verläuft und mindestens eine der Kontrollelektroden (14) in einem Abstand oberhalb des unteren Endes der Spitze (5a) der Flüssigkeitstransferkanüle (5) angeordnet ist.

14. Verfahren nach Anspruch 13, **dadurch gekennzeichnet, daß** die Eintauchbewegung der Flüssigkeitstransferkanüle (5) in die Analyseflüssigkeit (4) in inkrementellen Absenkschritten durchgeführt wird, bei der ersten Detektion einer Flüssigkeitsoberfläche mittels des kapazitiven Flüssigkeitshöhenstandsdetektors die Eintauchbewegung fortgesetzt und erst nach einer während der fortgesetzten Eintauchbewegung durchgeführten, mehrfachen, aufeinanderfolgenden Detektion von Flüssigkeit mittels des kapazitiven Flüssigkeitshöhenstandsdetektors die Eintauchbewegung gestoppt wird.

15. Verfahren nach Anspruch 13 oder 14, **dadurch gekennzeichnet, daß** die Änderung des Widerstands (R) der Detektionsstrecke (16) während der Eintauchbewegung der Flüssigkeitstransfernaküle (5) kontinuierlich oder intermittierend oder nach dem Stoppen der Eintauchbewegung kontrolliert sowie bei positiver Detektion von kompakter Flüssigkeit mittels der Kontrollelektroden (14, 15) der Flüssigkeitstransfer durchgeführt oder bei negativer Detektion von kompakter Flüssigkeit mittels der Kontrollelektroden (14, 15) die Eintauchbewegung neu gestartet bzw. fortgesetzt wird.

16. Verfahren nach Anspruch 13 oder 14, **dadurch gekennzeichnet, daß** der Flüssigkeitstransfer nach einem Stoppen der Eintauchbewegung der Flüssigkeitstransferkanüle (5) durchgeführt sowie während des Flüssigkeitstransfers das Eintauchen der Flüssigkeitstransferkanüle (5) in die Analyseflüssigkeit (4) mittels einer Messung des Widerstands (R) der Detektionsstrecke (16) überprüft wird.

17. Flüssigkeitstransferkanüle (5) zur Verwendung in einer Flüssigkeitstransfereinrichtung nach einem der Ansprüche 1 bis 12 oder in einem Verfahren nach einem der Ansprüche 13 bis 16, **dadurch gekennzeichnet, daß** die Flüssigkeitstransferkanüle (5) zwei Kontrollelektroden (14, 15) aufweist, zwischen denen eine Detektionsstrecke (16) ausgebildet ist, die sich über einen in Längsrichtung der Flüssigkeitstransferkanüle (5) verlaufenden Abschnitt erstreckt und deren sich beim Füllen der Detektionsstrecke (16) in der Flüssigkeitstransferkanüle (5) mit Analyseflüssigkeit (4) ergebende Änderung des Widerstands (R) detektierbar ist, die Kontrollelektroden (14, 15) derart angeordnet sind, daß die Detektionsstrecke (16) im Innern der Flüssigkeitstransferkanüle (5) verläuft, eine der Kontrollelektroden (15) von der Flüssigkeitstransferkanüle (5), insbesondere der Spitze (5a) gebildet ist und die andere Kontrollelektrode (14) in einem Abstand oberhalb des unteren Endes der Spitze (5a) der Flüssigkeitstransferkanüle (5) angeordnet ist.

## Claims

1. Liquid transfer device for an analysis apparatus with a liquid transfer cannula (5) and a capacitive liquid level detector to detect the immersion of the liquid transfer cannula (5) in an analysis liquid (4) contained in a vessel (2), wherein the liquid level detector comprises a signal electrode, a counter electrode and a detection circuit (26) to detect a change in capacitance between the signal electrode and the counter electrode,
**characterized in that**
the liquid transfer cannula (5) has two control electrodes (14, 15), between which a measurement section (16) is formed, which extends over an area running in the longitudinal direction of the liquid transfer cannula (5), wherein the liquid transfer cannula (5) forms one of the control electrodes (15),
the control electrodes (14, 15) are arranged in such a way that the measurement section (16) passes inside the liquid transfer cannula (5),
at least one of the control electrodes (14) is arranged at a distance above the lower end of the tip (5a) of the liquid transfer cannula (5) and
the detection circuit (26) comprises a control device (32, 36) which is designed to detect a change in the resistance (R) of the measurement section (16) occurring when the measurement section (16) in the liquid transfer cannula (5) is filled with analysis liquid (4).

2. Liquid transfer device according to claim 1, **characterized in that** the tip (5a) of the liquid transfer cannula (5) forms one of the control electrodes (15).

3. Liquid transfer device according to any of the preceding claims, **characterized in that** the lower end of the measurement section (16) is arranged above the lower end of the tip (5a).

4. Liquid transfer device according to claim 3, **characterized in that** the lower end of the measurement section (16) is arranged between 0.5 mm and 5 mm above the lower end of the tip (5a).

5. Liquid transfer device according to any of the preceding claims, **characterized in that** the upper end of the measurement section (16) is arranged between 0.5 mm and 30 mm above the lower end of the tip (5a).

6. Liquid transfer device according to any of the preceding claims, **characterized in that** a control electrode (14) is formed by an inner tube (11) arranged in the liquid transfer cannula (5) into which the analysis liquid (4) can be suctioned up, preferably by the lower end of the inner tube (11).

7. Liquid transfer device according to any of the preceding claims, **characterized in that** the liquid transfer cannula (5) is part of a dosing tip, especially a disposable dosing tip.

8. Liquid transfer device according to any of the preceding claims, **characterized in that** the liquid transfer cannula (5) is part of a coaxial electrode configuration (18) which apart from the liquid transfer cannula (5) has at least one coaxial electrode (19) surrounding this and insulated therefrom.

9. Liquid transfer device according to claim 8, **characterized in that** the coaxial electrode configuration (18) has a screening electrode (20) which surrounds the signal electrode, is at constant potential and acts as counter electrode.

10. Liquid transfer device according to claim 8 or 9, **characterized in that** the detection circuit (26) has an AC voltage source and a voltage follower circuit and the input and output of the voltage follower circuit are connected with two adjacent electrodes of the coaxial electrode configuration (18) as signal electrode and compensation electrode so that no voltage difference occurs between the signal electrode and the compensation electrode.

11. Liquid transfer device according to claim 10, **characterized in that** a first electrode of the coaxial electrode configuration (18) is the signal electrode of the liquid level detector and is connected with the input of the voltage follower circuit and a second electrode of the coaxial electrode configuration which is adjacent to the signal electrode, is connected with the output of the voltage follower circuit.

12. Liquid transfer device according to claim 10 or 11, **characterized in that** the liquid transfer cannula (5) as signal electrode is connected with the input of the voltage follower circuit and the adjacent coaxial electrode as compensation electrode is connected with the output of the voltage follower circuit.

13. Method for controlling the suctioning in of analysis liquid (4) into a liquid transfer cannula (5) of a liquid transfer device according to one of the preceding claims of an analysis unit, wherein the immersion of the liquid transfer cannula into an analysis liquid (4) contained in a vessel (2) is detected by means of a capacitive liquid level detector which comprises a signal electrode, a counter electrode and a detection circuit (26) to detect a change in capacitance between the signal electrode and the counter electrode,
**characterized in that**
to control filling up of the liquid transfer cannula (5) with analysis liquid (4) the change in the resistance (R) of a measurement section (16) formed between control electrodes (14, 15) of the liquid transfer cannula (5) is detected by means of a control device (32, 36), wherein the measurement section (16) extends over an area running in the longitudinal direction of the liquid transfer cannula (5) and wherein the control electrodes (14, 15) are arranged in such a way that the measurement section (16) passes inside the liquid transfer cannula (5) and at least one of the control electrodes (14) is arranged at a distance above the lower end of the tip (5a) of the liquid transfer cannula (5).

14. Method according to claim 13, **characterized in that** the immersion motion of the liquid transfer cannula (5) into the analysis liquid (4) is carried out in incremental lowering steps with the first detection of a liquid surface by means of the capacitive liquid level detector, the immersion motion is continued and only stopped after multiple, subsequent detection of liquid during the continued immersion motion by means of the capacitive liquid level detector.

15. Method according to claim 13 or 14, **characterized in that** the change in the resistance (R) of the measurement section (16) is controlled during the immersion motion of the liquid transfer cannula (5) continuously or intermittently or after the immersion motion has stopped, also the liquid transfer is carried out at positive detection of the compact liquid by means of the control electrodes (14, 15) or at negative detection of compact liquid by means of the control electrodes (14, 15) the immersion motion is restarted or continued.

16. Method according to claim 13 or 14 **characterized in that** the liquid transfer is carried out after the immersion motion of the liquid transfer cannula (5) has stopped and also the immersion of the liquid transfer cannula (5) into the analysis liquid (4) is checked during the liquid transfer by measuring the resistance (R) of the measurement section (16).

17. Liquid transfer cannula (5) for use in a liquid transfer device according to one of claims 1 to 12 or in a method according to one of claims 13 to 16, **characterized in that** the liquid transfer cannula (5) has two control electrodes (14, 15) between which a measurement section (16) is formed, which extends over an area running in the longitudinal direction of the liquid transfer cannula (5), wherein the change in the resistance (R) of the measurement section (16) occurring when the measurement section (16) in the liquid transfer cannula (5) is filled with analysis liquid (4) can be detected, the control electrodes (14, 15) are arranged in such a way that the measurement section (16) passes inside the liquid transfer cannula (5), one of the control electrodes (15) is formed by the liquid transfer cannula (5), particularly the tip (5a) and the other control electrode (14) is arranged at a distance above the lower end of the tip (5a) of the liquid transfer cannula (5).

## Revendications

1. Dispositif pour le transfert de liquides pour un instrument d'analyse, avec une canule de transfert de liquide (5) et avec un détecteur capacitif de niveau de remplissage du liquide pour la détection de l'immersion de la canule de transfert de liquide (5) dans un liquide à analyser (4) se trouvant dans un récipient (2), le détecteur de niveau de remplissage du liquide comprenant une électrode collectrice, une contre-électrode et un circuit de détection (26), pour la détection d'une modification de la capacité entre l'électrode collectrice et la contre-électrode,
**caractérisé en ce que**
la canule de transfert de liquide (5) comporte deux électrodes de contrôle (14, 15), entre lesquelles est créé un trajet de détection (16), qui s'étend sur un tronçon s'étendant en direction longitudinale de la canule de transfert de liquide (5), la canule de transfert de liquide (5) formant l'une des électrodes de contrôle (15),
les électrodes de contrôle (14, 15) sont disposées de façon telle que le trajet de détection (16) s'étende à l'intérieur de la canule de transfert de liquide (5),
au moins l'une des électrodes de contrôle (14) est disposée à une distance au dessus de l'extrémité inférieure de la pointe (5a) de la canule de transfert de liquide (5),
le circuit de détection (26) comprend un dispositif de contrôle (32, 36), qui est conçu pour contrôler une modification de la résistance (R) du trajet de détection (16) résultant lors du remplissage du trajet de détection (16) dans la canule de transfert de liquide (5) avec du liquide à analyser (4).

2. Dispositif pour le transfert de liquides selon la revendication 1, **caractérisé en ce que** la pointe (5a) de la canule de transfert de liquide (5) forme l'une des électrodes de contrôle (15).

3. Dispositif pour le transfert de liquides selon l'une quelconque des revendications précédentes, **caractérisé en ce que** l'extrémité inférieure du trajet de détection (16) est disposée au dessus de l'extrémité inférieure de la pointe (5a).

4. Dispositif pour le transfert de liquides selon la revendication 3, **caractérisé en ce que** l'extrémité inférieure du trajet de détection (16) est disposée à entre 0,5 mm et 5 mm au dessus de l'extrémité inférieure de la pointe (5a).

5. Dispositif pour le transfert de liquides selon l'une quelconque des revendications précédentes, **caractérisé en ce que** l'extrémité supérieure du trajet de détection (16) est disposée à entre 0,5 mm et 30 mm au dessus de l'extrémité inférieure de la pointe (5a).

6. Dispositif pour le transfert de liquides selon l'une quelconque des revendications précédentes, **caractérisé en ce qu'**une électrode de contrôle (14) est formée par un tube intérieur (11) disposé dans canule de transfert de liquide (5), dans lequel le liquide à analyser (4) peut être aspiré, notamment par l'extrémité inférieure de celui-ci.

7. Dispositif pour le transfert de liquides selon l'une quelconque des revendications précédentes, **caractérisé en ce que** la canule de transfert de liquide (5) est un élément d'une pointe de dosage à usage unique.

8. Dispositif pour le transfert de liquides selon l'une quelconque des revendications précédentes, **caractérisé en ce que** la canule de transfert de liquide (5) est un élément d'un agencement d'électrodes coaxiales (18), qui hormis la canule de transfert de liquide (5) comporte au moins une électrode coaxiale (19) entourant cette dernière et isolée par rapport à elle.

9. Dispositif pour le transfert de liquides selon la revendication 8, **caractérisé en ce que** l'agencement d'électrodes coaxiales (18) comporte une électrode de blindage (20) qui entoure l'électrode collectrice, qui est sur potentiel constant et qui agit en tant que contre-électrode.

10. Dispositif pour le transfert de liquides selon la revendication 8 ou 9, **caractérisé en ce que** le circuit de détection (26) comporte une source de tension alternative et un circuit d'asservissement de tension et **en ce que** l'entrée et la sortie du circuit d'asservissement de tension sont reliées avec deux électrodes voisines de l'agencement d'électrodes coaxiales (18) en tant qu'électrode collectrice et qu'électrode de compensation, pour qu'aucune tension différentielle ne naisse entre l'électrode collectrice et l'électrode de compensation.

11. Dispositif pour le transfert de liquides selon la revendication 10, **caractérisé en ce qu'**une première des électrodes de l'agencement d'électrodes coaxiales (18) est l'électrode collectrice du détecteur de niveau de liquide et est reliée avec l'entrée du circuit d'asservissement de tension, et **en ce que** la deuxième électrode de l'agencement d'électrodes coaxiales, qui est voisine de l'électrode collectrice est reliée avec la sortie du circuit d'asservissement de tension.

12. Dispositif pour le transfert de liquides selon la revendication 10 ou 11, **caractérisé en ce que**, en tant qu'électrode collectrice, la canule de transfert de liquide (5) est reliée à l'entrée du circuit d'asservissement de tension et en tant qu'électrode de compensation, l'électrode coaxiale voisine est reliée à la sortie du circuit d'asservissement de tension.

13. Procédé de contrôle de l'aspiration de liquide à analyser (4) dans une canule de transfert de liquide (5) d'un dispositif pour le transfert de liquides selon l'une quelconque des revendications précédentes d'un instrument d'analyse, dont l'immersion dans un liquide à analyser (4) se trouvant dans un récipient (2) est détectée au moyen d'un détecteur capacitif du niveau de liquide qui comprend une électrode collectrice, une contre-électrode et un circuit de détection (26), pour la détection d'une modification de la capacité entre l'électrode collectrice et la contre-électrode,
**caractérisé en ce que**
pour le contrôle du remplissage de la canule de transfert de liquide (5) avec du liquide à analyser (4), on contrôle la modification de la résistance (R) d'un trajet de détection (16) conçu entre des électrodes de contrôle (14, 15) de la canule de transfert de liquide (5), qui s'étend sur un tronçon s'étendant dans la direction longitudinale de la canule de transfert de liquide (5), au moyen d'un dispositif de contrôle (32, 36), les électrodes de contrôle (14, 15) étant disposées de façon telle, que le trajet de détection (16) s'étende à l'intérieur de la canule de transfert de liquide (5) et qu'au moins l'une des électrodes de contrôle (14) soit disposée à une distance au dessus de l'extrémité supérieure de la pointe (5a) de la canule de transfert de liquide (5).

14. Procédé selon la revendication 13,
**caractérisé en ce que** le mouvement d'immersion de la canule de transfert de liquide (5) dans le liquide à analyser (4) est réalisé par étapes incrémentales d'abaissement, **en ce que** pendant la première détection d'une surface de liquide au moyen du détecteur capacitif du niveau de liquide, le mouvement d'immersion se poursuit et **en ce que** le mouvement d'immersion n'est arrêté qu'après une détection de liquide successive, multiple, réalisée pendant la poursuite du mouvement d'immersion au moyen du détecteur capacitif de niveau de liquide.

15. Procédé selon la revendication 13 ou 14,
**caractérisé en ce que** la modification de la résistance (R) du trajet de détection (16) est contrôlée en continu ou par intermittence pendant le mouvement d'immersion de la canule de transfert de liquide (5) ou après l'arrêt du mouvement d'immersion, et dans le cas d'une détection positive de liquide compact au moyen des électrodes de contrôle (14, 15), le transfert de liquide se réalise, ou dans le cas d'une détection négative de liquide compact au moyen des électrodes de contrôle (14, 15), le mouvement d'immersion se relance ou se poursuit.

16. Procédé selon la revendication 13 ou 14,
**caractérisé en ce que** le transfert de liquide se réalise après un arrêt du mouvement d'immersion de la canule de transfert de liquide (5), et pendant le transfert de liquide, l'immersion de la canule de transfert de liquide (5) dans le liquide à analyser (4) est vérifiée au moyen d'une mesure de la résistance (R) du trajet de détection (16).

17. Canule de transfert de liquide (5) destinée à être utilisée dans un dispositif pour le transfert de liquide selon l'une quelconque des revendications 1 à 12 ou dans un procédé selon l'une quelconque des revendications 13 à 16, **caractérisée en ce que** la canule de transfert de liquide (5) comporte deux électrodes de contrôle (14, 15), entre lesquelles est conçu un trajet de détection (16), qui s'étend sur un tronçon s'étendant dans la direction longitudinale de la canule de transfert de liquide (5) et dont la modification de la résistance (R) résultant du remplissage du trajet de détection (16) dans la canule de transfert de liquide (5) avec du liquide à analyser (4) est détectable, **en ce que** les électrodes de contrôle (14, 15) sont disposées de façon telle, que le trajet de détection (16) s'étende à l'intérieur de la canule de transfert de liquide (5), **en ce que** l'une des électrodes de contrôle (15) est formée par la canule de transfert de liquide (5), notamment par la pointe (5a) et **en ce que** l'autre électrode de contrôle (14) est disposée à une distance au dessus de l'extrémité inférieure de la pointe (5a) de la canule de transfert de liquide (5).
